# EUROPEAN PATENT APPLICATION

(11) **EP 4 568 264 A1**
(43) Date of publication of application: **11.06.2025**
(21) Application number: 23870294.8
(22) Date of filing: 11.09.2023
(51) Int. Cl.: H04N 23/55

(54) **OPTICAL ASSEMBLY, PREPARATION METHOD FOR OPTICAL ASSEMBLY, AND ELECTRONIC DEVICE**

(30) Priority: 29.09.2022 CN 202211202910
(71) Applicant: Honor Device Co., Ltd., Shenzhen, Guangdong 518040 (CN)
(72) Inventor: MIAO, Dengkui, Shenzhen, Guangdong 518040 (CN); GAO, Chengjie, Shenzhen, Guangdong 518040 (CN); XU, Wenbin, Shenzhen, Guangdong 518040 (CN); LU, Bin, Shenzhen, Guangdong 518040 (CN)
(74) Representative: MERH-IP Matias Erny Reichl Hoffmann Patentanwälte PartG mbB
(86) International application number: PCT/CN2023/118106
(87) International publication number: WO 2024/067055

(57) **Abstract**

Embodiments of this application provide an optical assembly, a preparation method for an optical assembly, and an electronic device. The optical assembly includes an optical component and an optical cover plate. The optical cover plate includes an optical body layer. The optical body layer covers a light-incident surface of the optical component and has a light-transmissive area arranged opposite to the optical component. The optical cover plate further includes a hydrophobic film layer. The hydrophobic film layer is light-transmissive, is located on a side of the optical body layer facing the optical component, and covers the light-transmissive area. A surface of the hydrophobic film layer facing the optical component is a hydrophobic rough surface with a first micro-nano structure. The optical assembly in this application can effectively reduce a proportion of mist-like dirt occurring on the optical cover plate.

## Description

This application claims priority to Chinese Patent Application No. 202211202910.9, filed with the China National Intellectual Property Administration on September 29, 2022, and entitled "OPTICAL ASSEMBLY, OPTICAL ASSEMBLY PREPARATION METHOD, AND ELECTRONIC DEVICE", which is incorporated herein by reference in its entirety.

### TECHNICAL FIELD

This application relates to the field of electronic device technologies, and in particular, to an optical assembly, an optical assembly preparation method, and an electronic device.

### BACKGROUND

A camera module has become a necessary functional module in an electronic device such as a mobile phone, a tablet computer, a notebook computer, or a wearable device. With continuous development of electronic devices, people's requirements on the photographing effect of the camera module gradually increase.

The camera module usually includes a module body and an optical cover plate. The module body is arranged inside a housing of the electronic device. The optical cover plate may be arranged on the housing and cover a lens of the module body. A peripheral edge of the module body may be adhered to the optical cover plate by using a foam adhesive or the like, and there is a spacing between the peripheral edge of the module body and the optical cover plate, so that a zoom function of the camera module can be satisfied while the module body is fixed inside the housing. A light-transmissive area is arranged at a position of the optical cover plate opposite to the lens, so that light outside the electronic device enters the module body through the light-transmissive area. After the entire electronic device is plated, atoms and molecules in the film layer, moisture, and some small molecules of the foam adhesive aggregate in the light-transmissive area, leading to the formation of mist-like dirt.

Therefore, how to reduce mist-like dirt on an optical cover plate has become a technical problem to be resolved.

### SUMMARY

This application provides an optical assembly, an optical assembly preparation method, and an electronic device, to effectively reduce a proportion of mist-like dirt occurring on an optical cover plate of the optical assembly.

A first aspect of embodiments of this application provides an optical assembly. The optical assembly includes:
an optical component; and
an optical cover plate, where the optical cover plate includes an optical body layer, the optical body layer blocks a light-incident surface of the optical component and has a light-transmissive area arranged opposite to the optical component.

The optical cover plate further includes a hydrophobic film layer. The hydrophobic film layer is light-transmissive, is located on a side of the optical body layer facing the optical component, and covers the light-transmissive area.

A surface of the hydrophobic film layer facing the optical component is a hydrophobic rough surface with a first micro-nano structure.

In this application, through arrangement of the hydrophobic film layer in the optical cover plate, because the hydrophobic film layer is light-transmissive, is located on the side of the optical body layer facing the optical component, and covers the light-transmissive area, the optical cover plate has hydrophobic performance in the light-transmissive area, to reduce adhesion of a liquid (for example, a water drop) on the hydrophobic rough surface, the hydrophobic rough surface presents a rough morphology with a micro-sized and/or nano-sized surface structure due to existence of the first micro-nano structure, and an undulating micro-nano structure is formed on the hydrophobic rough surface. Due to low surface energy on the hydrophobic rough surface and large surface tension between air and the liquid, a liquid drop aggregating on the first micro-nano structure has a large water drop angle and an extremely small roll angle on the hydrophobic rough surface, reducing a proportion of mist-like dirt occurring in the light-transmissive area of the surface (which is an inner surface of the optical cover plate) of the optical cover plate facing the optical component.

In an optional implementation, the optical component is a camera module, and the camera module includes a lens, where the optical body layer blocks a light-incident surface of the lens; and a position of the light-transmissive area in the optical body layer is opposite to a position of the lens, to reduce a proportion of mist-like dirt occurring on the inner surface of the optical cover plate in the light-transmissive area.

In an optional implementation, the camera module further includes a module body, the lens is located on a side of the module body facing the optical cover plate, where the non-light-transmissive area in the optical body layer surrounds a peripheral edge of the light-transmissive area, and the non-light-transmissive area blocks the module body, In this way, the camera module and the optical cover plate are combined, a light entering amount of the light-transmissive area is ensured, and more camera modules can be blocked by the optical cover plate.

In an optional implementation, the hydrophobic film layer of the optical cover plate includes a hydrophobic layer, the hydrophobic layer is located on a side of the optical body layer facing the optical component and covers the light-transmissive area, and a surface of the hydrophobic layer facing the optical component is a hydrophobic rough surface. In this way, through arrangement of the hydrophobic layer, the hydrophobic rough surface is formed, and the water drop angle of the inner surface of the optical cover plate in the light-transmissive area is increased.

In an optional implementation, the optical body layer of the optical cover plate includes a substrate and a first anti-reflection layer, the first anti-reflection layer covers a side of the substrate facing the hydrophobic film layer, and a side of the first anti-reflection layer facing the hydrophobic film layer is a rough surface with a second micro-nano structure, where the first micro-nano structure is adhered to and covers the second micro-nano structure.

In this way, through arrangement of the first anti-reflection layer, a reflectance of the inner surface of the optical cover plate can be reduced, and ghosting intensity during photographing in a general scenario and in a strong contrast environment can be reduced. In addition, formation of the first micro-nano structure can be facilitated due to existence of the second micro-nano structure.

In an optional implementation, a shape of the first micro-nano structure matches a shape of the second micro-nano structure, so that the first micro-nano structure matching the second micro-nano structure can be formed on a surface of the hydrophobic layer, and the inner surface of the optical cover plate further has an anti-reflection effect of the first anti-reflection layer in the light-transmissive area without affecting the anti-reflection effect of the first anti-reflection layer.

In an optional implementation, a refractive index of the first anti-reflection layer is configured to gradually change from a refractive index corresponding to the first anti-reflection layer to a refractive index corresponding to air in a direction from the substrate to the hydrophobic film layer, so that while the first anti-reflection layer forms a gradient film layer with a gradually changing refractive index in the direction from the substrate to the hydrophobic film layer, reducing the reflectance of the inner surface of the optical cover plate, light reflected by the lens to the first anti-reflection layer can be further absorbed, reducing the ghosting intensity during photographing.

In an optional implementation, the second micro-nano structure includes a plurality of protrusions, where a bottom of the protrusion is connected to the substrate, a top of the protrusion is arranged facing the hydrophobic film layer, and the protrusion gradually tapers from the bottom to the top, so that while through formation of the first anti-reflection layer, multi-level reflection of light between the optical cover plate and the lens is reduced, and the ghosting intensity during photographing in a strong contrast environment is reduced, a light trapping effect is further formed on a surface of the first anti-reflection layer, and light reflected by the lens to the first anti-reflection layer is absorbed, thereby further reducing the ghosting intensity during photographing in a strong contrast environment.

In an optional implementation, bottoms of the plurality of protrusions are connected, to increase density of the protrusions on the surface of the first anti-reflection layer and enhance the light trapping effect.

In an optional implementation, the protrusion is a micro-sized and/or nano-sized protrusion, where a height of the protrusion is greater than or 50 nm and less than or equal to 200 nm, and a size of the bottom is greater than or 150 nm and less than or equal to 500 nm, so that while transmittance of light on the optical cover plate is not affected, and reflectivity of the inner surface of the optical cover plate is reduced, the protrusion can cooperate with the first micro-nano structure, to increase the water drop angle and an oil drop angle of the inner surface of the optical cover plate.

In an optional implementation, a thickness of the hydrophobic layer is greater than or equal to 5 nm and less than or equal to 30 nm, so that while formation of the hydrophobic layer and hydrophobic performance of the hydrophobic layer are not affected, an impact of the thickness of the hydrophobic layer on a height of the first micro-nano structure can be reduced.

In an optional implementation, the plurality of protrusions are arranged in an array, so that the plurality of protrusions are arranged on the inner surface of the optical body layer in a regular manner, facilitating release of stress of a film layer and reducing strain of the optical body layer.

In an optional implementation, the second micro-nano structure includes a plurality of depressions, where the depressions are micro-sized and/or nano-sized depressions, and the plurality of depressions are uniformly arranged on the optical body layer. In this way, while a micro morphology of the surface of the first anti-reflection layer is changed by using the plurality of depressions, the reflectance of the inner surface of the optical cover plate is reduced, and ghosting intensity during photographing in a strong contrast environment is reduced, the water drop angle of the inner surface of the optical cover plate can be increased, and the roll angle of the inner surface of the optical cover plate in the light-transmissive area can be reduced.

In an optional implementation, the first anti-reflection layer is a light trapping layer or a porous coating layer, to reduce the reflectance of the inner surface of the optical cover plate and reduce the ghosting intensity during photographing in a strong contrast environment, and make the structure of the first anti-reflection layer more diversified.

In an optional implementation, the hydrophobic film layer further includes an underlayer, the underlayer is attached to a light-transmissive area on the side of the optical body layer facing the optical component, and the hydrophobic layer covers the underlayer, so that adhesion of the hydrophobic layer on the surface of the first anti-reflection layer is increased through the underlayer, and stability of performance of the inner surface of the optical cover plate is enhanced.

In an optional implementation, a surface of the underlayer facing the hydrophobic layer of the hydrophobic film layer has a third micro-nano structure, where the third micro-nano structure covers the second micro-nano structure in the optical body layer and is adhered between the second micro-nano structure and the first micro-nano structure; and a shape of the third micro-nano structure matches the shape of the second micro-nano structure.

In this way, while the adhesion of the hydrophobic layer on the first anti-reflection layer is enhanced through the underlayer, due to arrangement of the third micro-nano structure, it can be helpful to ensure consistency between the first micro-nano structure and the second micro-nano structure.

In an optional implementation, a thickness of the underlayer is less than the thickness of the hydrophobic layer in the hydrophobic film layer.

In this way, while it is ensured that the hydrophobic layer is stably adsorbed to the first anti-reflection layer, an impact of the thickness of the underlayer on the height of the first micro-nano structure can be reduced.

In an optional implementation, the underlayer is an active underlayer the same as a base material of the first anti-reflection layer in the optical body layer, so that the underlayer and the first anti-reflection layer have a good bonding strength.

In an optional implementation, the base material of the first anti-reflection layer is silicon dioxide, and the active underlayer is a silicon dioxide layer. In this way, while it is ensured that the underlayer has a good bonding strength on the first anti-reflection layer, the underlayer can achieve a relatively high surface activity, to adsorb the hydrophobic layer to the first anti-reflection layer and increase the adhesion of the hydrophobic layer on the first anti-reflection layer.

In an optional implementation, the hydrophobic layer in the hydrophobic film layer is a perfluoropolyethers plating layer, so that while it is satisfied that the hydrophobic rough surface of the hydrophobic layer has good hydrophobic and oleophobic properties, light transmission efficiency in the light-transmissive area is not affected.

In an optional implementation, a water drop angle of the optical cover plate on the hydrophobic film layer is greater than 150°, and/or a roll angle of the optical cover plate on the hydrophobic film layer is less than 40°. In this way, the optical cover plate has good hydrophobic performance on the hydrophobic film layer (namely, the light-transmissive area).

In an optional implementation, the optical body layer further includes a second anti-reflection layer, where the second anti-reflection layer is light-transmissive and is located on a surface of the substrate of the optical body layer facing away from the hydrophobic film layer, to reduce reflection of light by an outer surface of the optical cover plate and protect the outer surface of the optical cover plate from being scratched.

A second aspect of embodiments of this application further provides an optical assembly preparation method. The preparation method is used for manufacturing the optical assembly according to any one of the foregoing implementations. The preparation method includes:
preparing an optical stack, where an optical cover plate includes an optical body layer and a hydrophobic film layer, and the optical body layer includes the optical stack;
forming a hydrophobic film layer on a surface of the optical stack, where the hydrophobic film layer covers a light-transmissive area on the optical stack corresponding to the optical body layer, and a surface of the hydrophobic film layer facing away from the optical stack is a hydrophobic rough surface with a first micro-nano structure; and
combining the optical cover plate including the optical stack with an optical component, to form the optical assembly, where the hydrophobic rough surface is arranged facing the optical component.

In this way, through arrangement of the hydrophobic film layer, the surface of the optical stack on which the hydrophobic rough surface is arranged can have hydrophobic performance in the light-transmissive area. Because the hydrophobic rough surface is arranged facing the optical component, the surface of the optical stack on which the hydrophobic rough surface is arranged can be used as an inner surface of the optical cover plate, and the light-transmissive area of the optical stack can be used as a light-transmissive area of the optical cover plate, so that when the optical cover plate and the optical component are combined to form the optical assembly, a water drop angle of the inner surface of the optical cover plate in the light-transmissive area can be increased, thereby effectively reducing the proportion of mist-like dirt occurring on the optical cover plate after the entire electronic device is plated.

In an optional implementation, the preparing the optical stack specifically includes:
processing a surface of a to-be-processed plate to form the optical stack, where the to-be-processed plate is an unprocessed glass plate, where
the optical stack includes a substrate and a first anti-reflection layer, the first anti-reflection layer covers a side of the substrate facing the hydrophobic film layer, and a side of the first anti-reflection layer facing the hydrophobic film layer is a rough surface with a second micro-nano structure; and the hydrophobic film layer is located on the first anti-reflection layer and covers the light-transmissive area on the first anti-reflection layer corresponding to the optical body layer.

Through arrangement of the first anti-reflection layer, due to existence of the second micro-nano structure on the first anti-reflection layer, it is facilitate to formation of the first micro-nano structure on the hydrophobic film layer, to reduce the proportion of mist-like dirt occurring on the optical cover plate in the light-transmissive area, and a reflectance of the surface of the hydrophobic film layer can be reduced, to reduce ghosting intensity during photographing in a general scenario and in a strong contrast environment.

In an optional implementation, the forming the hydrophobic film layer on the surface of the optical stack specifically includes:
forming a hydrophobic layer with the first micro-nano structure on a surface of the substrate with the second micro-nano structure, where
the first micro-nano structure is located on the second micro-nano structure and covers the light-transmissive area on the first anti-reflection layer corresponding to the optical body layer, a surface of the hydrophobic layer facing the optical component is the hydrophobic rough surface, and the hydrophobic film layer includes the hydrophobic layer.

In this way, through arrangement of the hydrophobic layer, the surface of the hydrophobic layer facing the optical component can form a hydrophobic rough surface, to be combined with the first micro-nano structure, increase a water drop angle of the substrate in the light-transmissive area, and reduce the proportion of mist-like dirt formed in the light-transmissive area.

In an optional implementation, before the forming the hydrophobic layer with the first micro-nano structure on the surface of the substrate with the second micro-nano structure, the preparation method further includes:
forming an underlayer with a third micro-nano structure on the surface of the substrate with the second micro-nano structure, where
the third micro-nano structure covers the second micro-nano structure and is adhered between the second micro-nano structure and the first micro-nano structure, and the hydrophobic film layer further includes the underlayer.

In this way, through arrangement of the underlayer, adhesion of the hydrophobic layer on the first anti-reflection layer is increased.

In an optional implementation, the processing the surface of the to-be-processed plate to form the optical stack specifically includes:
forming a metal film on the to-be-processed plate under a vacuum condition, and performing heat treatment on the metal film, to contract the metal film, and obtain a particle template having a plurality of particles;
performing plasma etching on the particle template, to form the second micro-nano structure on a particle surface of the particle template; and
performing cleaning processing on the particle template to obtain the optical stack, where a part of the second micro-nano structure is the first anti-reflection layer, and a part other than the first anti-reflection layer in the optical stack is the substrate.

In this way, through arrangement of the metal film, the surface of the to-be-processed plate can be selectively etched, to form the second micro-nano structure.

In an optional implementation, the processing the surface of the to-be-processed plate to form the optical stack specifically includes:
performing chemical corrosion on the to-be-processed plate, and forming the second micro-nano structure on the surface of the to-be-processed plate to obtain the optical stack, where
a part of the second micro-nano structure is the first anti-reflection layer, and a part other than the first anti-reflection layer in the optical stack is the substrate.

In this way, when the first anti-reflection layer is formed, a manufacturing process and a structure of the first anti-reflection layer can be more diversified.

In an optional implementation, after the forming the hydrophobic film layer on the surface of the optical stack, and before the combining the optical cover plate including the optical stack with the optical component, to form the optical assembly, the preparation method further includes:
forming a second anti-reflection layer on a surface of the optical stack facing away from the hydrophobic film layer, where the optical body layer further includes the second anti-reflection layer.

In this way, through arrangement of the second anti-reflection layer, a reflectance of the surface (which is an outer surface of the optical cover plate) of the optical body layer facing away from the hydrophobic film layer can be reduced to less than 0.3%, thereby effectively preventing ghosting from being generated during photographing by the electronic device in a general scenario and a strong contrast scenario.

A third aspect of embodiments of this application further provides an electronic device. The electronic device includes a housing and the optical assembly according to any one of the foregoing implementations. An optical component in the optical assembly is located in an accommodating space of the housing, and an optical cover plate is located on the housing and covers a light-incident surface of the optical component.

In this way, through protection for optical component by using the optical cover plate, a water drop angle of a surface of the optical cover plate facing the optical component in the light-transmissive area can be increased, thereby effectively reducing a proportion of mist-like dirt formed on the optical cover plate.

### BRIEF DESCRIPTION OF DRAWINGS

FIG. 1 is a schematic diagram of a water drop angle of a water drop;
FIG. 2 is a schematic diagram of a roll angle of a water drop on a solid surface;
FIG. 3 is a schematic structural diagram of a front face of an electronic device according to an embodiment of this application;
FIG. 4 is a schematic exploded view of an electronic device according to an embodiment of this application;
FIG. 5 is a schematic diagram of a structure of a rear face of an electronic device according to an embodiment of this application;
FIG. 6 is a schematic diagram of a structure of an optical cover plate of a rear face of an electronic device according to an embodiment of this application;
FIG. 7 is a cross-sectional view of the electronic device in FIG. 6 in a direction A-A;
FIG. 8 is a schematic diagram of a part of an optical cover plate after an entire electronic device is plated in the related art;
FIG. 9 is a schematic diagram of a structure of an optical assembly according to an embodiment of this application;
FIG. 10 is a schematic exploded view of a part of a camera module and an optical cover plate in FIG. 9 in a light-transmissive area;
FIG. 11 is a schematic diagram of a part of an optical cover plate after an entire electronic device is plated according to an embodiment of this application;
FIG. 12 is a schematic diagram of transmission of light of an optical cover plate in the related art;
FIG. 13 is another schematic diagram of a structure of an optical cover plate in the related art;
FIG. 14 is still another schematic diagram of a structure of an optical cover plate in the related art;
FIG. 15 is a schematic diagram of a structure of an optical body layer in FIG. 10;
FIG. 16 is a schematic exploded view of a part of an optical cover plate according to an embodiment of this application;
FIG. 17 is a schematic diagram of layers of a second anti-reflection layer according to an embodiment of this application;
FIG. 18 is a schematic diagram of changing of a structure of an optical cover plate during preparation according to an embodiment of this application;
FIG. 19 is a flowchart of a preparation method for an optical cover plate according to an embodiment of this application; and
FIG. 20 is a flowchart of a preparation method for a hydrophobic film layer in an optical cover plate according to an embodiment of this application.

Descriptions of reference numerals in the accompanying drawings:
100: electronic device; 1: display screen; 2: housing; 21: middle frame; 211: side frame; 212: middle plate; 22: rear cover; 221: opening; 222: support portion; 3: camera module; 31: module body; 311: driving apparatus; 312: optical filtering assembly; 313: image sensor assembly; 32: lens; 321: light-incident surface;
4: optical cover plate; 41: optical body layer; 411: substrate; 4111: to-be-processed plate; 412: first anti-reflection layer; 4121: second micro-nano structure; 4122: protrusion; 4123: bottom; 4124: top; 4125: particle; 413: second anti-reflection layer; 4131: first film layer; 4132: second film layer; 414: light-transmissive area; 415: non-light-transmissive area; 4151: adhering area; 4152: shielding area;
42: hydrophobic film layer; 421: hydrophobic layer; 4211: first micro-nano structure; 422: underlayer; 4221: third micro-nano structure; 43: mist-like dirt; 44: AR plating layer; 45: light trapping layer;
5: battery; 6: mainboard;
200: solid phase; and 300: liquid phase.

### DESCRIPTION OF EMBODIMENTS

Terms used in implementations of this application are merely intended to explain specific embodiments of this application rather than limit this application.

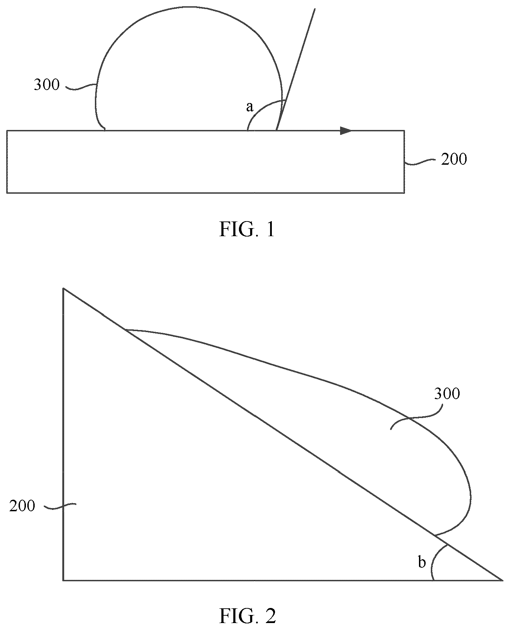

Water drop angle: is also referred to as a water contact angle, which is a type of a contact angle, and is usually defined as an angle between a gas phase-liquid phase 300 interface and a solid phase 200-liquid phase 300 interface at an intersection between the solid phase 200, the liquid phase 300, and the gas phase (not marked in FIG. 1). As shown in FIG. 1, an angle a illustrates a water drop angle. Usually, the water drop angle may be used for measuring mutual wettability of the solid phase 200 and the liquid phase 300 and exhibited hydrophilic performance or hydrophobic performance.

A small (for example, less than 90°) water drop angle indicates that a surface (the hydrophilic performance) of the solid phase 200 has high humidity and low exhibited energy, and is easy to be pasted. A large water drop angle (for example, greater than or equal to 90°) indicates that the surface of the solid phase 200 exhibits the hydrophobic performance and has poor surface adhesion. Generally, a material with a water drop angle exceeds 150° is referred to as a super-hydrophobic material. The water drop angle may further be used as a measure of an anti-fouling (for example, anti-fingerprint) effect of the solid phase 200. To achieve the anti-fingerprint effect, the water drop angle is generally required to be greater than 120°.

Contact angle of n-hexadecane: is also referred to as an oil contact angle (or an oil drop angle). The oil drop angle is similar to the water drop angle, and is also a type of the contact angle. Similarly, when the oil drop angle is less than 90°, it indicates that the surface of the solid phase 200 has high oleophilic performance. When the oil drop angle is greater than or equal to 90°, it indicates that the surface of the solid phase 200 has high oleophobic performance, and the adhesion of an oil drop on the surface of the solid phase 200 is poor.

The water drop angle generally represents performance of a water drop on a horizontal plane, however, a plane in reality is more of an inclined plane. A liquid (for example, a water drop) may roll or is still on the inclined plane. In this state, the water drop may be represented by a roll angle.

As shown in FIG. 2, the roll angle: is a critical inclined angle of a surface when a liquid (for example, a water drop) starts to roll on the surface of the solid phase 200. An angle b in FIG. 2 illustrates a roll angle. A smaller roll angle indicates higher hydrophobic performance of the surface of the solid phase 200.

It can be learned from this that a larger water drop angle and a smaller roll angle indicate higher hydrophobic performance of a material surface.

Micro-nano structure: may be understood as that a material surface has a micro-sized and/or nano-sized surface structure. The micro-nano structure is a morphology of a micro structure of the material surface.

An embodiment of this application provides an electronic device. The electronic device may include, but is not limited to, electronic devices such as a mobile phone, a tablet computer (namely, a pad), a virtual reality (virtual reality, VR) device, a notebook computer, a personal computer (personal computer, PC), an ultra-mobile personal computer (ultra-mobile personal computer, UMPC), a handheld computer, a smart wearable device, and a point of sales (point of sales, POS).

The following further describes a structure of the electronic device in embodiments of this application by using the mobile phone as an example.

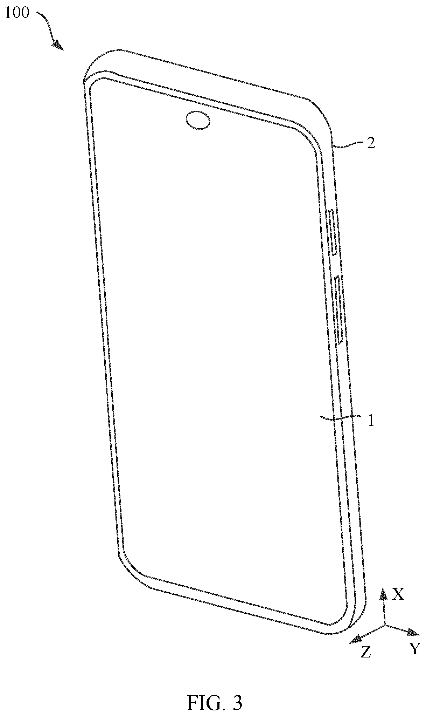

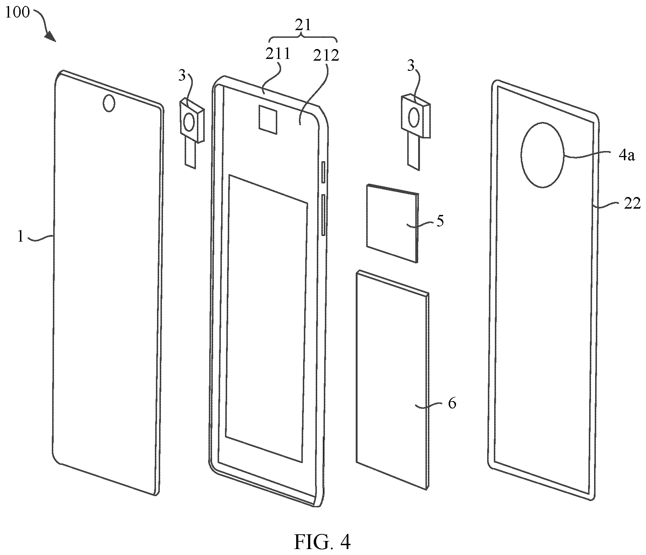

FIG. 3 is a three-dimensional schematic diagram of a structure of an electronic device, and FIG. 4 is a schematic exploded view of an electronic device. Refer to FIG. 3. An electronic device 100 provided in embodiments of this application may include a housing 2. The housing 2 includes a middle frame 21 and a rear cover 22. The rear cover 22 is connected to a side of the middle frame 21, and forms the housing 2 of the electronic device 100 with the middle frame 21, to provide a structural frame for the electronic device 100.

Referring to FIG. 4 and in combination with FIG. 3, in some embodiments, the middle frame 21 includes a middle plate 212 and a side frame 211 that are connected. The side frame 211 surrounds a peripheral edge of the middle plate 212, and forms the middle frame 21 with the middle plate 212. The side frame 211 is a square-ring structure formed by a plurality of side frames 211 connected head-to-tail.

Refer to FIG. 4. In some embodiments, when the electronic device 100 has a display function, the electronic device 100 further includes a display screen 1. The display screen 1 is mounted on a side of the side frame 211 that is opposite to the rear cover 22. The rear cover 22 covers a side of the middle frame 21, and encloses, jointly with the middle frame 21 and the rear cover 22, an accommodating space (not shown in the figure) of the electronic device 100.

Structural members of the electronic device 100 such as a mainboard 6, a battery 5, a microphone, a speaker, and an earphone may be arranged in the accommodating space. As shown in FIG. 4, the mainboard 6 and the battery 5 may be arranged together on a side of the middle plate 212 facing the rear cover 22, to facilitate electrical connection between the mainboard 6 and the battery 5. The mainboard 6 may be understood as a printed mainboard 6 bearing electronic elements. The electronic elements in the mainboard may include, but are not limited to, a system on a chip (system on a chip, SoC), an antenna module, a Bluetooth module, a wireless communication module (such as a Wi-Fi module), a positioning module, a radio frequency (radio frequency, RF) chip, a radio frequency power amplifier (radio frequency poZer amplifier, RFPA), a storage module (for example, a double data rate (double data rate, DDR) memory), a power management module, a charging module, a screen display and operation module, and the like.

Still refer to FIG. 4. A surface on which the display screen 1 is located constitutes a front face of the electronic device 100, and a surface on which the rear cover 22 is located constitutes a rear face of the electronic device 100. The display screen 1 is electrically connected to the mainboard 6, so that the display screen 1 can implement a display or operation function.

Refer to FIG. 4. In some embodiments, the electronic device 100 further includes a camera module 3. The camera module 3 may be arranged in the accommodating space, and is electrically connected to the mainboard 6, so that when a user inputs a photographing instruction, the camera module 3 can be controlled through the mainboard 6 to photograph an image.

FIG. 4 shows that a camera module 3 is arranged in the electronic device 100. It should be noted that, in an actual application, a quantity of camera modules 3 is not limited to one, and the quantity of the camera modules 3 may be two or more. To enhance photographing performance of the electronic device 100, a plurality of (for example, three, four, or five) camera modules 3 are generally arranged in the electronic device 100. Some camera modules 3 may be arranged on a side of the middle frame 21 facing the display screen 1, to form front camera modules.

FIG. 3 shows that the front camera module (not marked in the figure) is arranged in an area of the middle frame 21 toward a top and close to an edge of the electronic device 100. It may be understood that a position of the camera module 3 is not limited to the position shown in FIG. 3, and may alternatively be located at another position of the electronic device 100.

Refer to FIG. 4. Some camera modules 3 may further be arranged on a side of the middle frame 21 facing the rear cover 22, to form a rear camera module (not marked in the figure). The following further describes a structure of the electronic device 100 by using a rear camera module as an example.

Still refer to FIG. 4. The rear camera module may be arranged in an area of the middle frame 21 toward the top of the electronic device 100 and close to the edge. When there are a plurality of rear camera modules, the rear camera modules may be randomly arranged in an X-Y plane of the electronic device 100. For example, the plurality of rear camera modules may be arranged in an X direction, or the plurality of rear camera modules may be arranged in a Y direction. The X-Y plane may be understood as a plane formed by the X direction and the Y direction, and the plane is parallel to a display surface (not marked in the figure) of the display screen 1.

The rear camera module may include, but is not limited to, an auto focus (Auto Focus, AF) module, a fix focus (Fix Focus, FF) module, a wide-angle camera module, a telephoto camera module, a color camera module, or a grayscale camera module. For example, the telephoto camera module may include, but is not limited to, a periscope telephoto camera module (or a periscope camera module). The electronic device 100 may include any one of the foregoing camera modules 3, or include two or more of the foregoing camera modules 3.

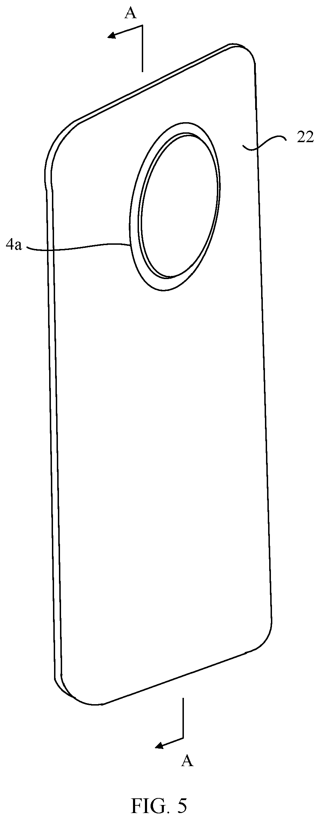

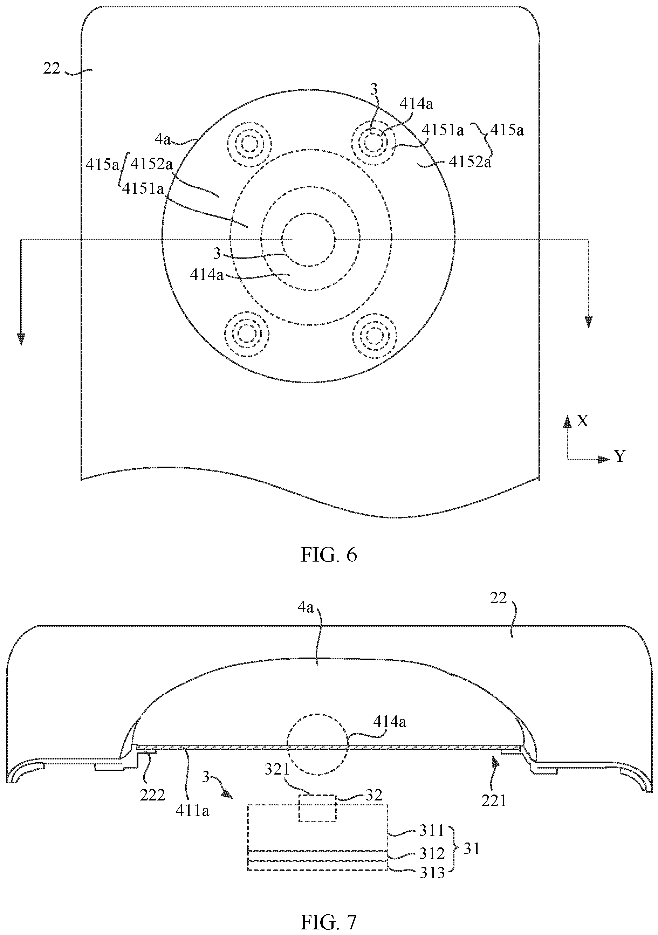

FIG. 5 is a schematic diagram of a structure of a rear face of an electronic device, FIG. 6 is a schematic diagram of a structure of an optical cover plate on a rear face of the electronic device, and FIG. 7 is a cross-sectional view of the electronic device in FIG. 6 in a direction A-A.

To facilitate light outside the electronic device 100 to enter the camera module 3, refer to FIG. 5 to FIG. 7. The electronic device 100 further includes an optical cover plate 4a. An opening 221 matching a structure of the optical cover plate 4a is arranged at a position on the rear cover 22 opposite to the camera module 3. The optical cover plate 4a is arranged at the opening 221 and covers the plurality of camera modules 3, to shield the camera modules 3 and protect the camera modules 3. In this case, the optical cover plate 4 may also be referred to as a lens cover plate.

As shown in FIG. 7, the camera module 3 may include a module body 31 and a lens 32. The module body 31 includes a driving apparatus 311. One part of the lens 32 is mounted in the driving apparatus 311, and the other part is exposed to the outside of the driving apparatus 311. The lens 32 usually includes one or a plurality of stacked lenses (for example, an optical lens). The driving apparatus 311 is configured to drive the lens 32 to move. For example, the driving apparatus 311 may further drive the lens 32 to move toward the rear cover 22 or away from the rear cover 22 in a direction of an optical axis, to implement a zoom or focus function of the camera module 3. The periscope camera module may provide an optical zoom of 5 times, 10 times, or another times.

Alternatively, in some implementations, the driving apparatus 311 may drive the lens 32 to move (for example, translate or rotate) in a plane in which the driving apparatus 311 is located, to compensate for hand wobbling of the user during photographing, to achieve an anti-wobble function of the camera module 3.

In some embodiments, as shown in FIG. 6 and FIG. 7, the optical cover plate 4a may cover a light-incident surface 321 of the lens 32, and a light-transmissive area 414a is arranged on the optical cover plate 4a and a position of the camera module 3 covered by the optical cover plate 4a, so that light outside the electronic device 100 can pass through the light-transmissive area 414a and enter the lens 32, to achieve a photographing function of the camera module 3. The light-transmissive area 414a may also be referred to as a camera aperture area. A shape of the light-transmissive area 414a matches a shape of the lens 32. Generally, to increase a light entering amount of the lens 32, the shape of the light-transmissive area 414a may be larger than the shape of the lens 32.

Refer to FIG. 6 and FIG. 7. The optical cover plate 4a may further include a non-light-transmissive area 415a, and the non-light-transmissive area 415a surrounds a peripheral edge of the light-transmissive area 414a. The non-light-transmissive area 415a includes a shielding area 4152a and an adhering area 4151a, and the adhering area 4151a is arranged on the peripheral edge of the light-transmissive area 414a. The shielding area 4152a surrounds a side of the adhering area 4151a away from the light-transmissive area 414a. The driving apparatus 311 may be adhered to the adhering area 4151a (not shown in the figure) on an inner surface of the optical cover plate 4a by using a buffer adhesive such as a foam adhesive, to fix the camera module 3 to the optical cover plate 4a and the rear cover 22. When the optical cover plate 4a covers a plurality of camera modules 3 at the same time, the adhering areas 4151a corresponding to the plurality of camera modules 3 may be connected through the adhering area 4151a, to form the non-light-transmissive area 415a.

The inner surface of the optical cover plate 4a may be understood as a surface of the optical cover plate 4a facing the camera module 3, and an outer surface of the optical cover plate 4a may be understood as a surface of the optical cover plate 4a facing away from the camera module 3.

Still refer to FIG. 7. The module body 31 further includes an optical filtering assembly 312 and an image sensor assembly 313. The optical filtering assembly 312 and the image sensor assembly 313 are sequentially arranged on a light exit side of the lens 32. The optical filtering assembly 312 may include an optical filter, and the image sensor assembly 313 may include an image sensor electrically connected to the mainboard. In this way, light outside the electronic device 100 enters the lens 32 through the light-transmissive area 414a, and exits through the lens 32. The light may sequentially pass through the optical filtering assembly 312 and the image sensor assembly 313, and is processed by the image sensor, to form an image, thereby achieving the photographing function of the camera module 3.

Still refer to FIG. 7, the optical cover plate 4a includes a substrate 411a. The substrate 411a is used as the only light-transmissive optical element in the optical cover plate 4a, and is usually glass. The glass may include, but is not limited to, common glass, tempered glass, and the like. The common glass may be understood as an undecorated glass having a smooth surface. The tempered glass is a chemical strengthened glass obtained through chemical strengthening processing such as ion exchange performed on common glass. Both the light-transmissive area 414a and the non-light-transmissive area 415a are arranged on an optical body layer of the substrate.

Because a surface (for example, an inner surface) of an existing optical cover plate 4a generally has a smooth planar structure, when a liquid, for example, a water drop, falls onto the inner surface of the optical cover plate 4a, the liquid may press against the optical cover plate 4a under an action of a weight of the liquid, so that the water drop is flattened, to attach to the optical cover plate 4a.

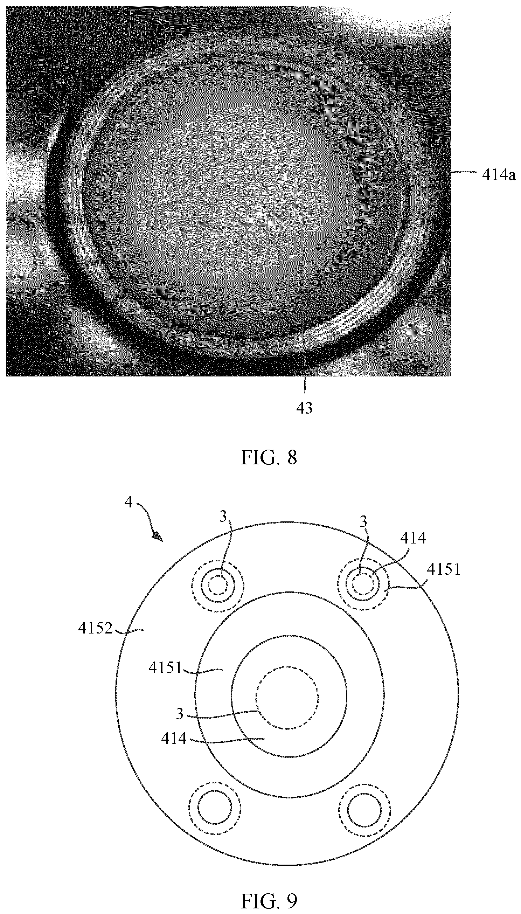

After assembly of structural members of the electronic device 100, for example, a mobile phone, is completed, the entire electronic device is usually plated, to enhance waterproofing performance of the electronic device 100. FIG. 8 is a schematic diagram of a structure of one of the light-transmissive areas 414a of the optical cover plate 4a after the entire electronic device 100 is plated in the related art. Refer to FIG. 8. After the entire electronic device is plated, the applicant finds that there is mist-like dirt 43 in the light-transmissive area 414a on the inner surface of the optical cover plate 4a corresponding to the camera module 3.

Due to existence of the mist-like dirt 43, cleanliness of the optical cover plate 4a and transmission of light in the optical cover plate 4a and the camera module 3 are affected.

It is found through research that a reason why the mist-like dirt 43 is caused is that to facilitate movement of the lens 32 relative to the optical cover plate 4a in the direction of the optical axis driven by the driving apparatus 311, the lens 32 is fixed behind the optical cover plate 4, and there is a spacing between the lens 32 and the optical cover plate 4a. During plating of the entire electronic device 100, air inside the electronic device 100 is extracted, and air between the lens 32 and the optical cover plate 4a is also extracted. In a deflation process after the plating of the entire electronic device, atoms and molecules of a plating layer, moisture, and some small molecules of the foam adhesive attach to and aggregate on the inner surface of the optical cover plate 4a along with water drops in airflow during vacuum breaking. After the water drops are vaporized, the atoms and molecules of the plating layer and some small molecules of the foam adhesive remain on the inner surface of the optical cover plate 4a, so that there is mist-like dirt 43 in the light-transmissive area 414a on the inner surface of the optical cover plate 4a corresponding to the camera module 3.

Because a spacing by which the periscope camera module needs to be moved is large, a spacing between the periscope camera module and the optical cover plate 4a is larger than a spacing between a lens 32 of another rear camera module and the optical cover plate 4a. Consequently, after the entire electronic device is plated, mist-like dirt 43 at a position on the optical cover plate 4a opposite to the periscope camera module is worse.

In view of this, an embodiment of this application provides an optical assembly, so that an original optical cover plate 4a of the electronic device 100 is replaced with an optical cover plate in the optical assembly, to cover a light-incident surface of an optical component, thereby effectively reducing a proportion of mist-like dirt occurring on the optical cover plate after the entire electronic device 100 is plated.

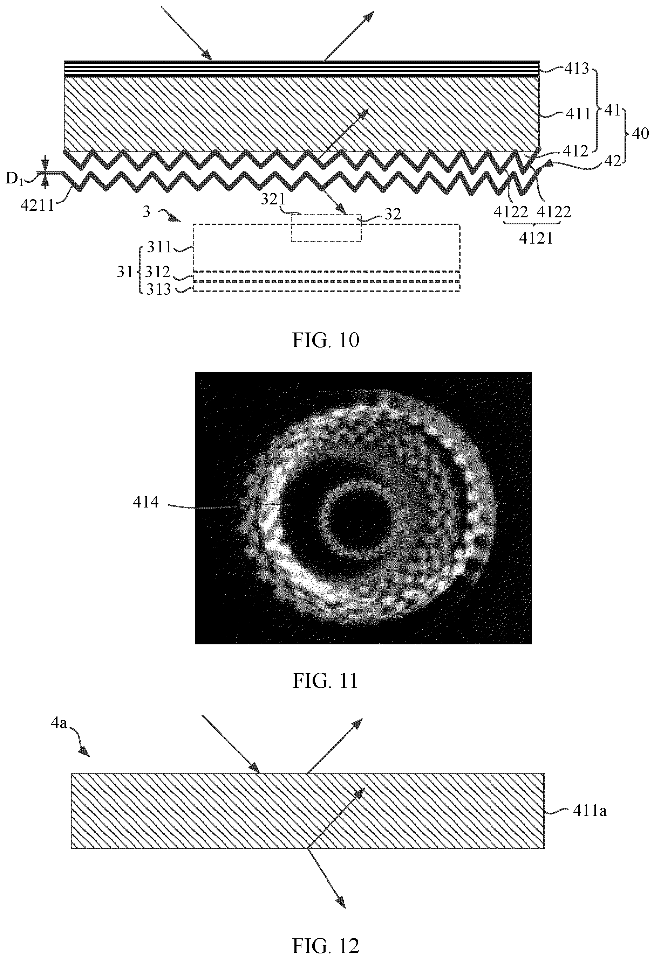

FIG. 9 is a schematic diagram of a structure of an optical cover plate according to an embodiment of this application. FIG. 10 is a schematic exploded view of a part of a camera module in the optical cover plate in FIG. 9 in a light-transmissive area, to facilitate observation of a layered structure in an optical cover plate 4.

Refer to FIG. 9 and FIG. 10, the optical assembly includes the optical cover plate and an optical component. The optical cover plate 4 includes an optical body layer 41. The optical body layer 41 blocks the light-incident surface 321 of the optical component (not marked in the figure).

Still refer to FIG. 9 and FIG. 10, the optical body layer 41 has a light-transmissive area 414 arranged opposite to the optical component. The optical cover plate 4 further includes a hydrophobic film layer 42, the hydrophobic film layer 42 is light-transmissive, is located on a side of the optical body layer 41 facing the optical component, and covers the light-transmissive area 414. A surface of the hydrophobic film layer 42 facing the optical component is a hydrophobic rough surface with a first micro-nano structure 4211 (not marked in the figure). The surface of the hydrophobic film layer 42 facing the optical component is an inner surface of the hydrophobic film layer 42. A surface of the hydrophobic film layer 42 facing away from the optical component can be understood as an outer surface of the hydrophobic film layer 42. For positions of the inner surface and the outer surface of the optical cover plate 4 and inner layers, reference may be made to related descriptions of the hydrophobic film layer 42. Because the optical body layer 41 is a part of the optical cover plate 4, the light-transmissive area 414 of the optical body layer 41 may also be understood as a light-transmissive area 414 of the optical cover plate 4.

Due to existence of the hydrophobic rough surface, the inner surface of the hydrophobic film layer 42 has hydrophobic performance, so that the wettability between the hydrophobic rough surface and the liquid phase 300 is low, and adhesion of a liquid (for example, a water drop) on the hydrophobic rough surface is poor, avoiding the atoms and molecules of the plating layer and some small molecules of the foam adhesive attaching to and aggregating on the hydrophobic rough surface along with a liquid (such as an oil drop or a water drop in airflow) after the entire electronic device 100 is plated, to reduce a proportion of mist-like dirt 43 occurring in the light-transmissive area 414 of the surface of the optical cover plate 4 facing the optical component (the inner surface of the optical cover plate).

Due to existence of the first micro-nano structure 4211, the hydrophobic rough surface presents a rough morphology with a micro-sized and/or nano-sized surface structure, and an undulating micro-nano structure is formed on the hydrophobic rough surface. Because the hydrophobic rough surface has low surface energy, and surface tension between the air and the liquid is large, when the atoms and molecules of the plating layer and some small molecules of the foam adhesive attach to a liquid (such as an oil drop or a water drop in airflow) and fall on the first micro-nano structure 4211 along with the liquid, the liquid aggregates into a liquid drop and stands on the first micro-nano structure 4211, so that the liquid drop (for example, a water drop) has a large water drop angle on the hydrophobic rough surface.

When the hydrophobic and oleophobic properties of the hydrophobic rough surface are combined with the first micro-nano structure 4211, the liquid such as a water drop or an oil drop can have an extremely small roll angle on the hydrophobic rough surface, making it easier for the liquid aggregating on the hydrophobic rough surface to slide out of the light-transmissive area 414, to further reduce the proportion of mist-like dirt 43 on the light-transmissive area 414 on the inner surface of the optical cover plate 4 corresponding to the camera module 3 (such as the periscope camera module 3). In this way, the surface of the optical cover plate 4 facing the optical component has an anti-fouling property, which ensures the cleanliness of the optical cover plate 4 while facilitating the transmission of light in the light-transmissive area 414 and the optical component, ensuring that use of the optical component is not affected.

In some embodiments, the optical component may be the camera module 3, and the camera module 3 includes the lens 32. The optical body layer 41 blocks the light-incident surface 321 of the lens 32. The light-transmissive area 414 is opposite to a position of the lens 32, to protect the lens 32 by blocking the light-incident surface 321 of the lens 32 by using the optical cover plate 4, and further reduce the proportion of mist-like dirt 43 occurring on the inner surface of the optical cover plate 4 in the light-transmissive area 414.

Using the camera module 3 as an example, referring to FIG. 10 and with reference to FIG. 7, the optical body layer 41 may be located at the opening 221 of the rear cover 22, and is fixed to the rear cover 22 through adhesion or in another manner, to fix the optical body layer 41 to the rear cover 22. For example, as shown in FIG. 7, a support portion 222 may be arranged on an opening wall of the opening 221 of the rear cover 22, the optical body layer 41 may be supported by the support portion 222, and is fixed on the support portion 222 through adhesion or in another manner (as shown in FIG. 7). For example, the support portion 222 may include, but is not limited to, a support step.

The optical body layer 41 may cover a camera module 3, or the optical body layer 41 may cover two or more camera modules 3 at the same time. In this application, a structure of the camera module 3 covered by the optical body layer 41 is not further limited.

The light-transmissive area 414 may be arranged at a position corresponding to the lens 32 of the camera module 3 covered by the optical body layer 41, so that light outside the electronic device 100 can enter the lens 32 of the camera module 3 through different light-transmissive areas 414, to achieve the photographing function of the camera module 3. It should be noted that for a shape and a size of the light-transmissive area 414, reference may be made to related descriptions of the optical cover plate 4 in the related art, and details are not described herein.

Alternatively, in some embodiments, when the electronic device 100 is a smart wearable device, the optical cover plate 4 in this application may further be used as a cover plate of a biological tracking optical sensor (PPG) in the smart wearable device, and cover a light-incident surface of the biological tracking optical sensor. For arrangement of the optical cover plate 4 in the smart wearable device, reference may be made to related descriptions of a cover plate of a PPG in the related art, which is not further limited herein.

The following further describes the structure of the optical cover plate 4 by using the camera module 3 as an example.

A water drop angle of the optical cover plate 4 in this application on the hydrophobic film layer 42 may be greater than 150°, and an oil drop angle may be greater than 95°, so that the inner surface of the optical cover plate 4 has good hydrophobic and oleophobic performance in the light-transmissive area 414. A roll angle of the inner surface of the optical cover plate 4 in this application on the hydrophobic film layer 42 may be less than 40°, so that a liquid drop aggregating on the first micro-nano structure 4211 may slide out of the light-transmissive area 414.

FIG. 11 is a schematic diagram of a part of the optical cover plate 4 after the entire electronic device 100 is plated according to this application. It can be seen from FIG. 11 that, due to arrangement of the hydrophobic film layer 42, after the entire electronic device 100 is plated, the mist-like dirt 43 can be hardly seen in the light-transmissive area 414 on the inner surface of the optical cover plate 4. It can be seen from this that this application can effectively reduce the proportion of the mist-like dirt 43 occurring on the inner surface of the optical cover plate 4 in the light-transmissive area 414 corresponding to the camera module 3, and even can avoid the mist-like dirt 43 on the light-transmissive area 414 on the inner surface of the optical cover plate 4.

Referring to FIG. 10 and in combination with FIG. 9, the camera module 3 further includes the module body 31, and the lens 32 is located on a side of the module body 31 facing the optical cover plate 4, so that light outside the electronic device 100 can enter the corresponding lens 32 through the light-transmissive area 414.

As shown in FIG. 9, the optical body layer 41 has a non-light-transmissive area 415, and the non-light-transmissive area 415 surrounds a peripheral edge of the light-transmissive area 414. The non-light-transmissive area 415 blocks the module body 31, so that while the camera module 3 and the optical cover plate 4 are combined, and a light entering amount of the light-transmissive area 414 is ensured, a size of the light-transmissive area 414 can be reduced, to block a larger quantity of camera modules 3 by using the optical cover plate 4.

In some embodiments, the module body 31 may be adhered to the non-light-transmissive area. For example, the module body 31 may be fixed in the non-light-transmissive area 415 by using a buffer adhesive such as a foam adhesive. In this application, an area to which the module body 31 is adhered and that is on the non-light-transmissive area 415 is an adhering area 4151. The non-light-transmissive area 415 further includes a shielding area 4152, and the shielding area 4152 surrounds a side of the adhering area 4151 facing away from the light-transmissive area 414. The non-light-transmissive area 415 of the optical body layer 41 may also be understood as a non-light-transmissive area 415 of the optical cover plate 4. When the optical body layer 41 covers a plurality of camera modules 3 at the same time, for formation of the non-light-transmissive area 415, refer to related descriptions of the optical cover plate 4 in the related art, and details are not described herein.

It should be noted that the optical body layer 41 may shield light through a light-shielding material on a peripheral edge of the adhering area 4151 corresponding to each lens 32 that is covered by the optical body layer 41, to form the shielding area 4152. Still refer to FIG. 10. The hydrophobic film layer 42 includes a hydrophobic layer 421. The hydrophobic layer 421 is located on a side of the optical body layer 41 facing the optical component (for example, the camera module 3) and covers the light-transmissive area 414. A surface of the hydrophobic layer 421 facing the optical component is a hydrophobic rough surface. In this way, the hydrophobic layer 421 can be used to form the hydrophobic rough surface, and the hydrophobic film layer 42 has specific hydrophobic and oleophobic performance on the hydrophobic rough surface, to prevent the atoms and molecules of the plating layer and some small molecules of the foam adhesive from attaching to and aggregating on the hydrophobic rough surface along with a liquid (such as an oil drop or a water drop in airflow). This reduces a proportion of the mist-like dirt 43 in the light-transmissive area 414 corresponding to the camera module 3 on the inner surface of the optical cover plate 4, and can ensure anti-fouling performance of the hydrophobic film layer 42 on the hydrophobic rough surface.

The hydrophobic layer 421 may be a perfluoropolyethers plating layer. Alternatively, in some embodiments, the hydrophobic layer 421 may be another film layer prepared by using a transparent material with hydrophobic and oleophobic performance. In this application, the hydrophobic layer 421 is a perfluoropolyethers plating layer. Perfluoropolyethers is used as a transparent lubricant. Because perfluoropolyethers has good hydrophobic and oleophobic performance, using the perfluoropolyethers plating layer formed by using perfluoropolyethers as the hydrophobic layer 421 satisfies that the hydrophobic rough surface of the hydrophobic layer 421 has good hydrophobic and oleophobic performance, so that the hydrophobic layer 421 has a good anti-fouling effect, and does not affect the light-transmissive efficiency in the light-transmissive area 414.

Based on contrast in a photographing environment, the photographing environments of the camera module 3 in the electronic device 100 are usually classified into an ordinary photographing environment and a strong contrast environment. The ordinary photographing environment may include photographing an object with normal light during the day, photographing an object in plenty of light indoors, or another relatively low-contrast photographing environment. The strong contrast environment may include a backlighting or a strong-contrast photographing environment such as photographing sunrise in the morning, photographing the sun in the evening, or photographing a streetlight in the evening.

FIG. 12 is a schematic diagram of transmission of light of the optical cover plate 4a in FIG. 8. Using a mobile phone as an example, when the optical cover plate 4a shown in FIG. 8 is used in the electronic device 100 in the related art, because the optical cover plate 4a includes only the substrate 411a, and the substrate 411a is made of ordinary glass, as shown in FIG. 12, when light rays enter the optical cover plate 4a, there is relatively high (for example, 4.2%) reflected light on both the inner surface and the outer surface of the optical cover plate 4a, and transmittance of light on the optical cover plate 4a is generally 90%, so that there is ghosting during photographing by the camera module 3 in the electronic device 100 in a general photographing environment and in a photographed picture.

This is mainly because the optical cover plate 4a (especially, the inner surface of the optical cover plate 4a) has a high reflectance. The optical cover plate 4a covers on the lens 32 and forms a group of lenses with a plurality of lenses inside the lens 32. Reflection exists between two adjacent lenses. When light passes through the optical cover plate 4a and the lens 32, multi-level reflection is generated at an interface between glass and air. A part of reflected light reaches the image sensor and is received by the image sensor. In this way, during photographing of the camera module 3, a photographed object is separated from an image of the photographed object, and obvious ghosting is generated during photographing in a general photographing environment and in a photographed photograph.

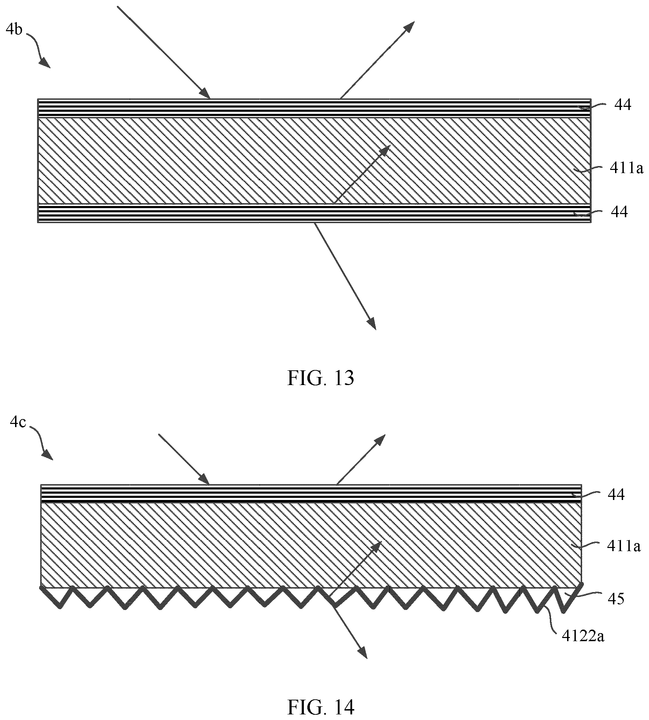

To reduce ghosting, FIG. 13 is a schematic diagram of a structure of another optical cover plate 4b provided in the related art. Refer to FIG. 13. The optical cover plate 4b includes a substrate 411a and an anti-reflection (anti-reflection, AR) plating layer. The AR plating layer 44 is located on two opposite surfaces of the substrate 411a and forms AR plating glass together with the substrate 411a. The AR plating glass may alternatively be transmission improving glass or anti-reflection glass. Due to existence of the AR plating layer 44, the AR plating glass has a lower reflection ratio compared with that only the optical cover plate 4a is included, and the reflectances of an inner surface and an outer surface of the optical cover plate 4b may be reduced from 4.2% to 0.5%.

Because the reflectances of the inner surface and the outer surface of the optical cover plate 4b are greatly reduced, during photographing by an electronic device 100 bearing the optical cover plate 4b in a general scenario, there is basically no ghosting. However, the inner surface and the outer surface of the optical cover plate 4b still have a reflectance of 0.5%, and there is still obvious ghosting during photographing by the electronic device 100 in a strong contrast environment.

Because the AR plating layer 44 is used on the inner surface of the optical cover plate 4b, the inner surface of the optical cover plate 4b has strong hydrophilic performance and oleophilic performance, and it is extremely easy for moisture and small organic molecules to attach to the inner surface, generating the mist-like dirt 43.

FIG. 14 is still another schematic diagram of a structure of an optical cover plate 4c in the related art. Refer to FIG. 14, the optical cover plate 4c includes a substrate 411a, an AR plating layer 44, and a light trapping layer 45. The AR plating layer 44 and the light trapping layer 45 are arranged on two opposite surfaces of the substrate 411a. A surface on which the AR plating layer 44 is located forms an outer surface of the optical cover plate 4c, and a surface on which the light trapping layer 45 is located forms an inner surface of the optical cover plate 4c.

The light trapping layer 45 includes a plurality of protrusions 4122a, a bottom of the protrusion 4122a is connected to the substrate 411a, and a top of the protrusion 4122a is located at an end of the substrate 411a facing away from the AR plating layer 44. The plurality of protrusions 4122a are continuously arranged on the substrate 411a to form the light trapping layer 45, so that a surface of the light trapping layer 45 presents a surface morphology in which a plurality of convex points (not marked in the figure) and concave points (not marked in the figure) are alternately and continuously arranged, forming a light trapping effect, to change a reflectance of the surface of the light trapping layer 45 for light. The convex point is a vertex of the protrusion 4122, and the concave point is located between adjacent protrusions 4122.

Because the air and the material (for example, glass) of the film layer forming the light trapping layer 45 have different refractive indexes, and in the surface morphology in which the plurality of convex points and concave points are alternately and continuously arranged, the proportion of the material of the film layer in the light trapping layer 45 gradually decreases in a direction from the bottom of the protrusion 4122a to the top of the protrusion 4122a, so that the light trapping layer 45 forms a gradient film layer having a gradually changing refractive index. In the direction of the light trapping layer 45 from the substrate 411a to the side facing away from the AR plating layer 44, the refractive index of the light trapping layer 45 for light gradually changes from a refractive index corresponding to the film layer to a refractive index corresponding to air.

In this way, the reflectance of the inner surface of the optical cover plate 4c can be further reduced from 0.5% to less than 0.03% through arrangement of the light trapping layer 45, and the ghosting intensity during photographing in a strong contrast environment can be reduced by half compared with the AR plating glass. However, due to existence of the light trapping layer 45, the inner surface of the optical cover plate 4c is rougher than an inner surface of the AR plating glass. Because surface energy of the optical cover plate 4c at the convex point is relatively large, when a liquid falls on the inner surface of the optical cover plate 4c, the liquid is easy to aggregate on the convex point to form a liquid drop. Because the surface of the light trapping layer 45 has a hydrophilic property, the liquid drop aggregating on the convex point is pulled off under a syphonage effect, to attach to the convex point and concave point. This easily causes the atoms and molecules of the plating layer and some small molecules of the foam adhesive to attach to and aggregate on the inner surface of the optical cover plate 4c, and forms the mist-like dirt 43 in the light-transmissive area 414.

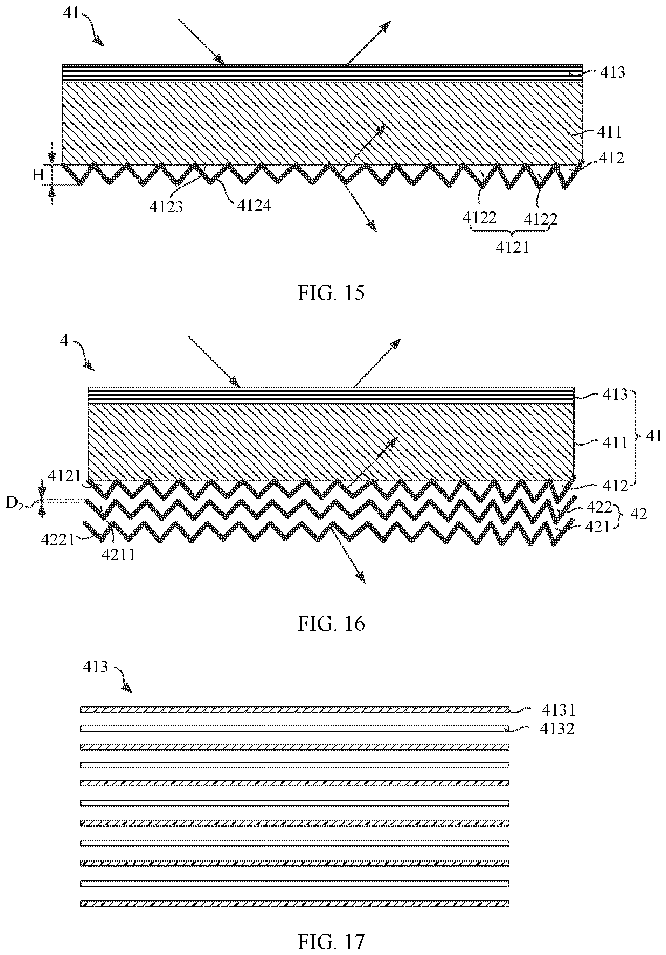

FIG. 15 is a schematic diagram of a structure of the optical body layer 41 in FIG. 10. Referring to FIG. 15 and in combination with FIG. 10, the optical body layer 41 includes a substrate 411 and a first anti-reflection layer 412. The substrate 411 may be a glass substrate. The glass substrate may be made of original glass, tempered glass, or the like. The first anti-reflection layer 412 covers a side of the substrate 411 facing the hydrophobic film layer 42. The side of the first anti-reflection layer 412 facing the hydrophobic film layer 42 is a rough surface with a second micro-nano structure 4121. A surface of the first anti-reflection layer 412 facing the hydrophobic film layer 42 forms an inner surface of the optical body layer 41. In other words, the inner surface of the optical body layer 41 is a rough surface with the second micro-nano structure 4121. The first micro-nano structure 4211 is adhered to and covers the second micro-nano structure 4121.

In this way, the hydrophobic film layer 42 is located on the rough surface of the first anti-reflection layer 412, to reduce a reflectance of the inner surface of the optical cover plate 4 by using the first anti-reflection layer 412, achieving a light trapping effect for reflection of an inner optical lens of the covered lens 32 and the outer surface of the lens 32, to reduce the ghosting intensity during photographing in a general scenario and in a strong contrast environment, and improve a photographing effect of the camera module 3.

In addition, due to existence of the second micro-nano structure 4121, the hydrophobic rough surface has a rough morphology with a micro-sized and/or nano-sized surface structure, so that the hydrophobic film layer 42 may cover the rough surface of the first anti-reflection layer 412, and the hydrophobic film layer 42 may be combined with the second micro-nano structure 4121, to form the first micro-nano structure 4211 on the surface of the hydrophobic layer 421. Therefore, while a water drop angle of a liquid (for example, a water drop) on the hydrophobic rough surface is increased by using the second micro-nano structure 4121, the liquid drop has an extremely small roll angle on the hydrophobic rough surface, so that the liquid drop aggregating on the first micro-nano structure 4211 can slide out of the light-transmissive area 414 more easily, to reduce the proportion of the mist-like dirt 43 formed in the light-transmissive area 414.

A shape of the first micro-nano structure 4211 matches a shape of the second micro-nano structure 4121, so that the first micro-nano structure 4211 matching the second micro-nano structure 4121 can be formed on a surface of the hydrophobic layer 421, and the hydrophobic rough surface of the hydrophobic film layer 42 can also have an anti-reflection effect of the first anti-reflection layer 412 without affecting an anti-reflection effect of the first anti-reflection layer 412. Because the hydrophobic rough surface is located in the light-transmissive area 414 of the inner surface of the optical cover plate 4, through matching between the shape of the first micro-nano structure 4211 and the second micro-nano structure 4121, a water drop angle of the inner surface of the optical cover plate 4 in the light-transmissive area 414 is increased, and the inner surface of the optical cover plate 4 further has an anti-reflection effect of the first anti-reflection layer 412 in the light-transmissive area 414.

In some embodiments, a refractive index of the first anti-reflection layer 412 is configured to gradually change from a refractive index corresponding to the first anti-reflection layer to the refractive index corresponding to air in a direction from the substrate 411 to the hydrophobic film layer 42, so that the first anti-reflection layer 412 is a gradient film layer with the refractive index continuously changing in the direction from the substrate 411 to the hydrophobic film layer 42. In this way, while the reflectance of the inner surface of the optical cover plate 4 for light in the light-transmissive area 414 is reduced by using the first anti-reflection layer 412, the light trapping effect can further be formed, to absorb the light reflected by the lens 32 to the first anti-reflection layer 412 (which is the light trapping effect) and reduce the ghosting intensity during photographing in a general scenario and in a strong contrast environment.

Still refer to FIG. 15. In some embodiments, the second micro-nano structure 4121 may include a plurality of protrusions 4122. A bottom 4123 of the protrusion 4122 is connected to the substrate 411, a top 4124 of the protrusion 4122 is arranged facing the hydrophobic film layer 42, and the protrusion 4122 gradually tapers from the bottom 4123 to the top 4124. The protrusion 4122 may be a pyramid, a semi-sphere, or another shape satisfying the foregoing requirement. For example, the pyramid may include, but is not limited to, a triangular pyramid, a square pyramid, or a pyramid formed by another number of polygons. The triangular pyramid may be regarded as a pyramid shape. A shape of protrusion 4122 is not further limited herein.

In this application, by using the plurality of protrusions 4122 and by limiting the shape of the protrusion 4122, the concave point (not marked in the figure) can be formed between two adjacent protrusions 4122, so that a surface morphology of a plurality of convex points (not marked in the figure) and concave points alternately stacked is formed on the inner surface of the optical body layer 41. In this way, a proportion of a base material of the first anti-reflection layer 412 gradually decreases, and a proportion of air (air at the concave points) in the first anti-reflection layer 412 gradually increases in the direction from the substrate 411 to the hydrophobic film layer 42, so that the refractive index of the first anti-reflection layer 412 for light is gradually changed from the refractive index corresponding to the first anti-reflection layer to the refractive index corresponding to the air in the direction from the substrate 411 to the hydrophobic film layer 42. The reflectances of the inner surface of the optical body layer 41 and the inner surface of the optical cover plate 4 for light in the light-transmissive area 414 are reduced, to reduce multi-level reflection of the light in the optical cover plate 4 and the lens 32 and reduce the ghosting intensity during photographing in a strong contrast environment. In addition, the light trapping effect can be further formed on the surface of the first anti-reflection layer 412 facing the hydrophobic film layer 42, to absorb the light reflected by the lens 32 to the first anti-reflection layer 412, thereby further reducing the ghosting intensity during photographing in a strong contrast environment.

In addition, the second micro-nano structure 4121 can further be formed by using the plurality of protrusions 4122, to increase, by using the second micro-nano structure, the water drop angle of the inner surface of the optical cover plate 4 in the light-transmissive area 414 and reduce the roll angle of the inner surface of the optical cover plate 4 in the light-transmissive area 414.

Still refer to FIG. 15. Bottoms 4123 of the plurality of protrusions 4122 are connected, so that density of the protrusions 4122 on the surface of the first anti-reflection layer 412 can be increased, and the surface morphology in which a plurality of convex points and concave points are alternately and continuously arranged is formed on the inner surface of the optical body layer 41. When the foregoing first anti-reflection layer 412 with the continuously changing refractive index is formed, the light trapping effect is enhanced, and the ghosting strength during photographing in a strong contrast environment is further reduced.

Still refer to FIG. 15. In some embodiments, the first anti-reflection layer 412 may be a light trapping layer.

Using the protrusion 4122 as an example, the protrusion 4122 on the surface of the light trapping layer may be formed by plating a metal film on a to-be-processed plate 4111 and etching after the metal film is contracted. The to-be-processed plate 4111 may be understood as a glass plate that is not processed (by etching or corrosion). In this way, while the reflectances of the inner surface of the optical body layer 41 and the inner surface of the optical cover plate 4 for light in the light-transmissive area 414 are reduced, and the ghosting intensity during photographing in a general scenario and in a strong contrast environment is reduced, the structure of the first anti-reflection layer 412 can be more diversified.

When the first anti-reflection layer 412 is the light trapping layer, same as the light trapping layer 45 in the related art, while the reflectance of the inner surface of the optical cover plate 4 can be reduced to less than 0.03% by using the first anti-reflection layer 412, the light trapping effect for reflection of the inner optical lens of the covered lens 32 and the outer surface of the lens 32, so that there is basically no ghosting during photographing in a general scenario, and the ghosting intensity during photographing in a strong contrast environment can be reduced.

In some embodiments, the second micro-nano structure 4121 may further include a plurality of depressions. The depressions are micro-sized and/or nano-sized depressions, and the plurality of depressions are uniformly arranged on the optical body layer 41 to form the first anti-reflection layer 412. For example, the depression may include, but is not limited to, a hole or a trench on the surface of the first anti-reflection layer 412. Correspondingly, the first micro-nano structure 4211 is also a hole or a trench matching the shape of the second micro-nano structure 4121.

Due to existence of the plurality of depressions, a micro morphology of the surface of the first anti-reflection layer 412 can also be changed, and the light trapping layer can be formed. The reflectance of the inner surface of the optical cover plate 4 is reduced to less than 0.03%. While the ghosting intensity during photographing in a strong contrast environment is reduced, a relatively protruding convex point may be formed in a connection area between two adjacent depressions, to increase the water drop angle and the oil drop angle of the inner surface of the optical cover plate 4 in the light-transmissive area 414 by using the first micro-nano structure 4211, and reduce the roll angle of the inner surface of the optical cover plate 4 in the light-transmissive area 414.

In some embodiments, the first anti-reflection layer 412 may alternatively be a porous coating layer, so that the structure of the first anti-reflection layer 412 is more diversified. When the first anti-reflection layer 412 is the porous coating layer, the second micro-nano structure 4121 may further include a plurality of micro-sized and/or nano-sized depressions.

The structure of the optical cover plate 4 in this application is further described below by using the protrusion 4122 as an example.

In some embodiments, the protrusion 4122 is the micro-sized and/or nano-sized protrusion, facilitating forming the first anti-reflection layer 412 having a micro morphology, to reduce a thickness of the optical cover plate 4.

Still refer to FIG. 15. A height H of the protrusion 4122 may be greater than or 50 nm and less than or equal to 200 nm, and a size of the bottom 4123 is greater than or 150 nm and less than or equal to 500 nm. The height H of the protrusion 4122 may alternatively be greater than or equal to 50 nm and less than or equal to 120 nm, and the size of the bottom 4123 may alternatively be greater than or equal to 170 nm and less than or equal to 500 nm. For example, the height H of the protrusion 4122 may be 50 nm, 120 nm, or 200 nm, and the size of the bottom 4123 may be 170 nm, 220 nm, or 500 nm. In this way, while transmittance of the light on the optical cover plate 4 is not affected, and the reflectivity of the inner surface of the optical cover plate 4 is reduced, the protrusion can cooperate with the first micro-nano structure 4211 to increase the water drop angle and the oil drop angle of the inner surface of the optical cover plate 4 in the light-transmissive area 414 and reduce the roll angle of the inner surface of the optical cover plate 4 in the light-transmissive area 414.

The size of the bottom 4123 may be understood as a maximum size or a remote size of the bottom 4123 of the protrusion 4122 along the foregoing X-Y plane. With different shapes of the protrusions 4122, sizes of the corresponding bottoms 4123 are also different. For example, when the protrusion 4122 is a triangular pyramid, the size of the bottom 4123 may be understood as a maximum side length of the bottom 4123 of the triangular pyramid. When the protrusion 4122 is a square pyramid, the size of the bottom 4123 may be understood as a diagonal line of the bottom 4123 of the square pyramid. When the protrusion 4122 is a semi-sphere, and a projection of the bottom of the protrusion 4122 on the X-Y plane is a circle, the size of the bottom 4123 may be understood as a diameter of the circle. When the protrusion 4122 is a semi-sphere, and a projection of the bottom of the protrusion 4122 on the X-Y plane is an ellipse, the size of the bottom 4123 may be understood as a diameter of a major axis of the ellipse.

As shown in FIG. 10, a thickness D₁ of the hydrophobic layer 421 may be greater than or equal to 5 nm and less than or equal to 30 nm. In some embodiments, the thickness D₁ of the hydrophobic layer 421 may be greater than or equal to 10 nm and less than or equal to 30 nm. In this way, through limiting the thickness D₁ of the hydrophobic layer, without affecting formation of the hydrophobic layer 421 and the hydrophobic performance, an impact of the thickness of the hydrophobic layer 421 on the height of the first micro-nano structure 4211 is reduced, to ensure that the water drop angle and the oil drop angle of the inner surface of the optical cover plate 4 can be increased through the arrangement of the first micro-nano structure 4211, and it can be convenient for light to pass through the optical cover plate 4.

The plurality of protrusions 4122 are arranged in an array, so that the second micro-nano structure 4121 is formed, and the plurality of protrusions 4122 can be arranged on the inner surface of the optical body layer 41 in a regular manner, facilitating release of stress of the film layer and reducing stress deformation of the optical body layer 41. Alternatively, the plurality of protrusions 4122 may be irregularly arranged on the inner surface of the optical body layer 41. An arrangement manner of the protrusions 4122 is not further limited in this application.

FIG. 16 is a schematic exploded view of a part of the optical cover plate 4 according to an embodiment of this application, to facilitate observation of a layered structure in the optical cover plate 4. To enhance an attachment effect of the hydrophobic layer 421 on the surface of the first anti-reflection layer 412, in some embodiments, as shown in FIG. 16, the hydrophobic film layer 42 may further include an underlayer 422. The underlayer 422 is attached to the light-transmissive area 414 on a side of the optical body layer 41 facing the optical component (for example, the camera module 3). The hydrophobic layer 421 covers the underlayer 422, so that an attachment strength of the hydrophobic layer 421 on the surface of the first anti-reflection layer 412 is increased by using the underlayer 422, thereby enhancing stability of performance of the inner surface of the optical cover plate 4.

Still refer to FIG. 16. The underlayer 422 is an active underlayer the same as the base material of the first anti-reflection layer 412. Because the active underlayer and the first anti-reflection layer 412 have the same base material, the active underlayer and the first anti-reflection layer 412 have a good bonding strength. In addition, because surface activity of the active underlayer is high, the hydrophobic layer 421 can be adsorbed to the first anti-reflection layer 412, increasing adhesion of the hydrophobic layer 421 to the first anti-reflection layer 412, so that the hydrophobic layer 421 is stably adsorbed to the first anti-reflection layer 412, and is not easy to fall off.

In some embodiments, the base material of the first anti-reflection layer 412 may be silicon dioxide or another light-transmissive optical base material. Using an example in which the base material of the first anti-reflection layer 412 is silicon dioxide, the underlayer 422 may be a silicon dioxide layer. Because the silicon dioxide layer and the base material of the first anti-reflection layer 412 are the same, and are both silicon dioxide, the base materials of the underlayer 422 and the first anti-reflection layer 412 are matched. In this way, while it is ensured that the underlayer 422 has a good bonding strength on the first anti-reflection layer 412, the underlayer 422 can achieve a relatively high surface activity, to adsorb the hydrophobic layer 421 to the first anti-reflection layer 412 and increase the adhesion of the hydrophobic layer 421 on the first anti-reflection layer 412.

Still refer to FIG. 16, a surface of the underlayer 422 facing the hydrophobic layer 421 has a third micro-nano structure 4221. The third micro-nano structure 4221 covers the second micro-nano structure 4121 and is attached between the second micro-nano structure 4121 and the first micro-nano structure 4211. A shape of the third micro-nano structure 4221 matches the shape of the second micro-nano structure 4121. In this way, while the adhesion of the hydrophobic layer 421 on the first anti-reflection layer 412 is enhanced by using the underlayer 422, consistency of the first micro-nano structure 4211 and the second micro-nano structure 4121 can be ensured due to arrangement of the third micro-nano structure 4221, so that while the water drop angle and the oil drop angle of the inner surface of the optical cover plate 4 in the light-transmissive area 414 are increased, the arrangement of the first micro-nano structure 4211 can be prevented from affecting transmission of light in the optical cover plate 4, thereby ensuring a photographing effect of the camera module 3.

Still referring to FIG. 16 and in combination with FIG. 15, a thickness D₂ of the underlayer 422 may be less than the thickness D₁ of the hydrophobic layer 421. The thickness D₂ of the underlayer 422 may be greater than or equal to 8 nm and less than or equal to 13 nm. Alternatively, in some embodiments, the thickness D₂ of the underlayer 422 may be greater than or equal to 3 nm and less than or equal to 13 nm. In this way, through limiting the thickness D₂ of the underlayer 422, while the adhesion of the hydrophobic layer 421 on the first anti-reflection layer 412 is ensured, an impact of an excessively large thickness of the underlayer 422 on the height of the first micro-nano structure 4211 and the thickness of the optical cover plate 4 can be avoided.

Based on the foregoing descriptions, still refer to FIG. 16. In some embodiments, the optical body layer 41 further includes a second anti-reflection layer 413. The second anti-reflection layer 413 is light-transmissive and is located on a surface of the substrate 411 facing away from the hydrophobic film layer 42. A surface of the second anti-reflection layer 413 facing away from the substrate 411 forms the optical body layer 41 and an outer surface of the optical cover plate 4. The outer surface of the optical cover plate 4 may be used as a light-incident surface. In this way, through arrangement of the second anti-reflection layer 413, reflection of light by the outer surface of the optical cover plate 4 can be reduced, protecting the outer surface of the optical cover plate 4 from being scratched.

The second anti-reflection layer 413 may be an optical anti-reflection film system. The optical anti-reflection film system may include, but is not limited to, an ordinary optical AR film system, a hard AR film system, and an anti-scratch AR film system. The ordinary optical AR film system may be understood as an AR film system having only optical performance such as anti-reflection. Because the ordinary optical AR film system, the hard AR film system, and the anti-scratch AR film system may be considered as AR plating layers 44, the reflectance of the outer surface of the optical cover plate 4 can be reduced from 0.5% to less than 0.3% through the arrangement of the second anti-reflection layer 413. Therefore, the reflectance of the inner surface of the optical cover plate 4 in this application may be reduced to less than 0.03%, and the reflectance of the outer surface may be reduced to less than 0.3%. This can effectively prevent ghosting from being generated during photographing by the electronic device 100 in a general scenario and in a strong contrast scenario.

FIG. 17 is a schematic diagram of layers of the second anti-reflection layer 413, and does not constitute a limitation on a quantity of layers of the second anti-reflection layer 413.

Refer to FIG. 17, the second anti-reflection layer 413 includes a first film layer 4131 and a second film layer 4132 with a refractive index greater than a refractive index of the first film layer 4131. The first film layer 4131 and the second film layer 4132 are alternately stacked on the substrate 411 of the optical body layer 41, to form the second anti-reflection layer 413. In a thickness direction of the second anti-reflection layer 413, the first film layer 4131 is located on a surface layer of the second anti-reflection layer 413. In this way, while the reflectance of the outer surface of the optical cover plate 4 is low, ghosting is effectively prevented from being generated during photographing by the electronic device 100 in a general scenario and a strong contrast scenario

Still refer to FIG. 17, the second anti-reflection layer 413 adopts a film stack 2H (two film materials). To enhance anti-scratch performance of the outer surface of the optical cover plate 4, the first film layer 4131 may be made of a film material with high hardness and a relatively low refractive index, such as silicon dioxide, and the second film layer 4132 may be made of a film material with a refractive index greater than a refractive index of the first film layer 4131, such as silicon nitride. In this way, while the reflectance of the outer surface of the optical cover plate 4 is low, the outer surface of the optical cover plate 4 can have some hardness, to protect the outer surface of the optical cover plate 4 from being scratched.

To verify the optical performance of the optical cover plate 4, the optical performance (such as a reflectance and transmittance) of the optical cover plate 4 is separately tested by using a spectrophotometer. Using a light wave with a wavelength ranging from 380 nm to 780 nm as an example, the reflectance of the optical cover plate 4 is less than 0.3%, and the transmittance of the optical cover plate 4 is greater than 98%.

According to the International Commission on Illumination, under a normal incident condition, in an (L*, a*, b*) chromaticity system, a chrominance meter is used to test chrominance of reflected light and transmitted light of the optical cover plate 4. L* represents luminance, a* represents red and green, and b* represents yellow and blue. A test result shows that in a color value of the reflected light, a deviation of a value a is within ±2, and a deviation of a value b is within ±2; in a color value of the transmitted light, a deviation of a value a is within ±2, and a deviation of a value b is within ±2. It can be seen from this that the color of visible light after the visible light is transmitted through the optical cover plate 4 and is reflected by the optical cover plate 4 is not affected, and the original color remains, to ensure accuracy of photographing an object by the covered camera module 3.

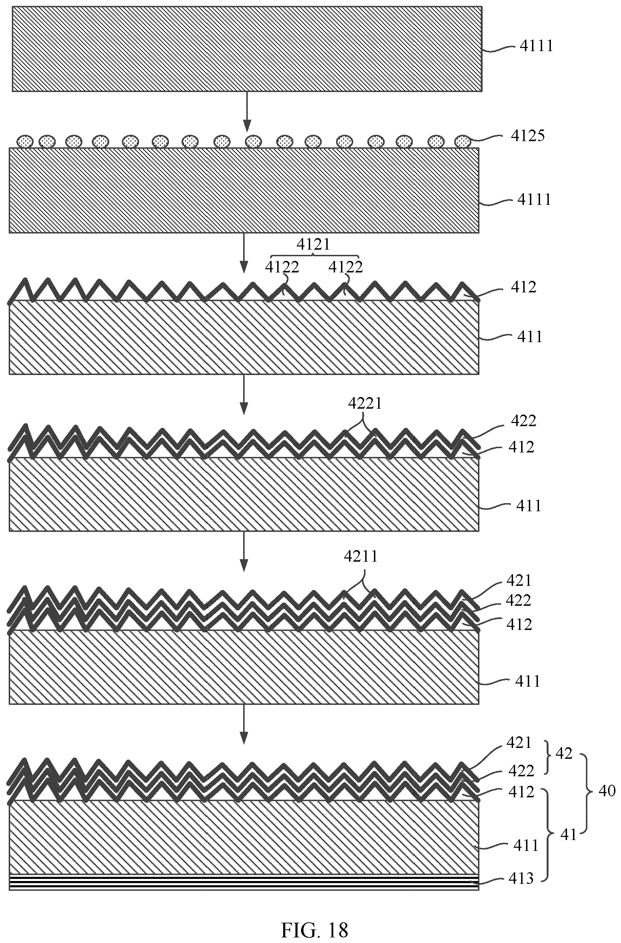

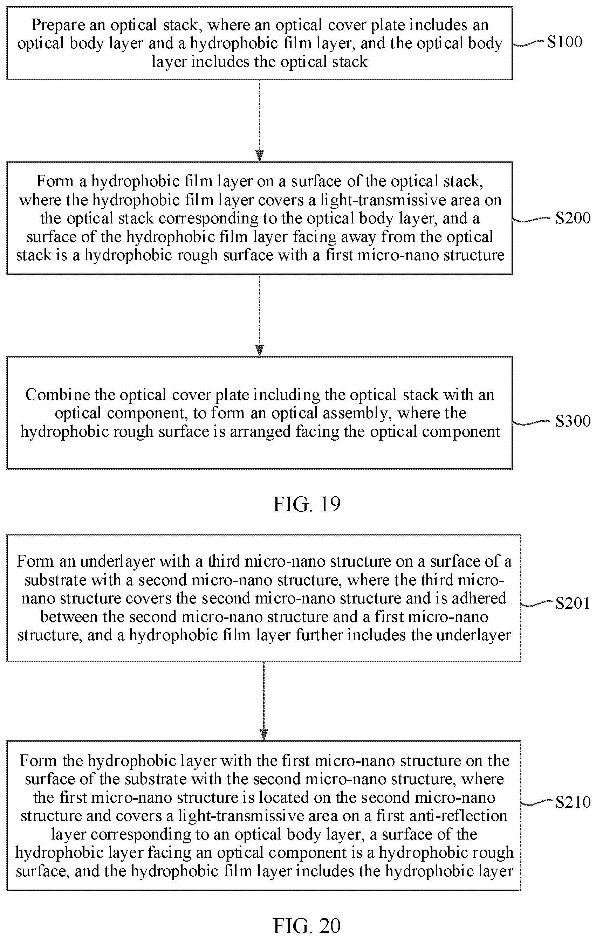

Based on the foregoing descriptions, an embodiment of this application further provides a preparation method for an optical assembly. The preparation method is applied to the foregoing optical assembly. FIG. 18 is a schematic diagram of changing of a structure of the optical cover plate 4 in an optical assembly during preparation, and FIG. 19 is a flowchart of a preparation method of the optical cover plate 4.

Refer to FIG. 18 and FIG. 19. The preparation method for an optical assembly includes:
Step S100: Prepare an optical stack, where an optical cover plate includes an optical body layer and a hydrophobic film layer, and the optical body layer includes the optical stack.
Step S200: Form a hydrophobic film layer on a surface of the optical stack, where the hydrophobic film layer covers a light-transmissive area on the optical stack corresponding to the optical body layer, and a surface of the hydrophobic film layer facing away from the optical stack is a hydrophobic rough surface with a first micro-nano structure.
Step S300: Combine the optical cover plate including the optical stack with an optical component, to form the optical assembly, where the hydrophobic rough surface is arranged facing the optical component.

It should be noted that through arrangement of the hydrophobic film layer 42 and the hydrophobic rough surface, the surface of the optical stack on which the hydrophobic rough surface is arranged has a hydrophobic property in the light-transmissive area 414 of the optical body layer 41. Because the hydrophobic rough surface is arranged facing the optical component, the surface of the optical stack on which the hydrophobic rough surface is arranged may be used as an inner surface of the optical cover plate 4, and the light-transmissive area 414 of the optical body layer 41 may be used as a light-transmissive area 414 of the optical cover plate 4. The light-transmissive area of the optical stack is located at a position opposite to the optical component (for example, the camera module 3) that is blocked by the light-transmissive area, so that ambient light is transmitted through the light-transmissive area of the optical stack and enters the optical component.

In this way, when the optical cover plate 4 is combined with the optical component to form the optical assembly, and the inner surface of the optical cover plate 4 is oriented to the optical component, a water drop angle and an oil drop angle of the inner surface of the optical cover plate 4 in the light-transmissive area 414 can be increased, and a roll angle of the inner surface of the optical cover plate 4 in the light-transmissive area 414 can be reduced, thereby effectively reducing a proportion of mist-like dirt occurring on the optical cover plate 4 after the entire electronic device 100 is plated.

For descriptions of the light-transmissive area 414 and the first micro-nano structure 4211, refer to the foregoing related descriptions, and details are not further described herein.

The preparing the optical stack in step S100 may specifically include:
processing a surface of a to-be-processed plate 4111 to form the optical stack, where the to-be-processed plate is an unprocessed glass plate.

The optical stack may include a substrate 411 and a first anti-reflection layer 412, the first anti-reflection layer 412 covers a side of the substrate 411 facing the hydrophobic film layer 42, a side of the first anti-reflection layer 412 facing the hydrophobic film layer 42 is a rough surface with a second micro-nano structure 4121, and the hydrophobic film layer 42 is located on the first anti-reflection layer 412 and covers light-transmissive area 414 on the first anti-reflection layer 412 corresponding to the optical body layer 41.

It should be noted that the processing on the to-be-processed plate 4111 may include, but is not limited to, etching or corrosion. In this way, through arrangement of the first anti-reflection layer 412, due to existence of the second micro-nano structure 4121, it is facilitate to formation of the first micro-nano structure 4211 on the hydrophobic film layer 42, to increase a water drop angle and an oil drop angle of the optical cover plate 4 on the surface of the hydrophobic film layer 42, reduce a roll angle, and reduce a proportion of mist-like dirt occurring on the optical cover plate 4 in the light-transmissive area 414, and the reflectance of the surface of the hydrophobic film layer 42 can be reduced, to reduce ghosting intensity during photographing in a general scenario and in a strong contrast environment.

A corresponding processing method may be adopted for processing the surface of the to-be-processed plate 4111 based on a difference of a structure of the second micro-nano structure 4121. The method for processing the surface of the to-be-processed plate 4111 is further described below with reference to the second micro-nano structures 4121 of different structures.

The second micro-nano structure 4121 includes a plurality of protrusions 4122. The protrusion 4122 is a micro-sized and/or nano-sized protrusion, or the second micro-nano structure 4121 includes a plurality of depressions, where the depressions are micro-sized and/or nano-sized depressions.

When the second micro-nano structure 4121 includes the plurality of protrusions 4122, the plurality of protrusions 4122 may be obtained by using a surface processing method well-known by a person skilled in the art by using processing methods such as metal masking, diamond flycutting, and chemical corrosion. This is not specially limited in this application.

Refer to FIG. 19. Using metal masking as an example, the processing the surface of the to-be-processed plate 4111 to form the optical stack may specifically include:
forming a metal film on the to-be-processed plate 4111 under a vacuum condition, and performing heat treatment on the metal film, to contract the metal film, and obtain a particle template (not shown in the figure) having a plurality of particles 4125;
performing plasma etching on the particle template, to form the second micro-nano structure 4121 on the particle surface of the particle template; and
performing cleaning processing on the particle template to obtain the optical stack, where a part of the second micro-nano structure 4121 is the first anti-reflection layer 412, and a part other than the first anti-reflection layer 412 in the optical stack is the substrate 411.

In this way, a part not covered by the particles 4125 on the to-be-processed plate 4111 can be etched through metal masking, to form the optical stack including the substrate and the plurality of second micro-nano structures 4121. A layered structure in which the plurality of second micro-nano structures 4121 are located forms the first anti-reflection layer 412, points at which the plurality of second micro-nano structures 4121 are located form convex points on the surface of the first anti-reflection layer 412, and points between the second micro-nano structures 4121 form convex points on the surface of the first anti-reflection layer 412, so that the first anti-reflection layer 412 forms a gradient film layer.

The first anti-reflection layer 412 may be a light trapping layer, to reduce a reflectance of the inner surface of the optical cover plate 4 and reduce ghosting during photographing by the electronic device 100, and can cooperate with the hydrophobic film layer 42 to increase the water drop angle and the oil drop angle of the inner surface of the optical cover plate 4 in the light-transmissive area 414, reduce the roll angle of the inner surface of the optical cover plate 4 in the light-transmissive area 414, and reduce the proportion of mist-like dirt 43 in the light-transmissive area 414.

It should be noted that in this application, a metal film may be formed on the to-be-processed plate 4111 through vacuum deposition or liquid coating. The vacuum deposition may include, but is not limited to, chemical gas phase deposition, physical gas phase deposition, thermal deposition, electron beam vaporization deposition, atomic layer deposition, or the like. The chemical gas phase deposition may include, but is not limited to, vacuum evaporation, and the physical gas phase deposition may include, but is not limited to, sputter deposition. The liquid coating may include, but is not limited to, manners such as spraying, dip coating, and spin coating.

For example, the metal film may include, but is not limited to, a molybdenum film, an indium film, or the like. Using vacuum sputter and the molybdenum film as an example, process parameters required for forming the molybdenum film can be first set in a plating machine. The process parameters include, but are not limited to, a film thickness, a vacuum degree, temperature, sputter power, gas flow rate, time, and the like. The to-be-processed plate 4111 to be coated is then loaded onto a substrate rack and placed in the plating machine. After vacuuming and inputting a corresponding degree, the plating is completed.

It should be noted that after the plating is completed, a molybdenum target and gas are turned off, and when the vacuum degree reaches a preset parameter, the molybdenum film is heat treated (such as heated). Parameters during heat treatment, such as a temperature rising speed, a maintained temperature after the heating, and a temperature-maintaining time, may be set, to obtain a particle template of particles with a preset diameter. After the particle template is obtained, a part on which the particle 4125 is not arranged on the particle template may be etched by using a method such as plasma etching, to form a plurality of nano-sized protrusions 4122 (nano protrusions) with a specific height and a specific bottom size, at a position at which the surface of the particle template is covered by the particle 4125. The plurality of protrusions 4122 are connected to form the second micro-nano structure 4121.

The performing cleaning processing on the particle template may specifically include:
at room temperature, the cleaning processing is performed on the molybdenum film on the surface of the protrusion 4122 by using a deplating solution, to obtain the optical stack having the first anti-reflection layer 412.

In embodiments of this application, a parameter of forming the molybdenum film through the vacuum sputter, a parameter of the heat treatment, and a parameter of the plasma etching are not specifically limited, and a person skilled in the art may select the parameter based on a requirement. To subsequently form the nano particle, in an embodiment, a film thickness of the molybdenum film may range from 3 nm to 8 nm.

To obtain nano particles that are of a diameter ranging from 50 nm to 70 nm and uniformly distributed, a heating rate of the heat treatment ranges from 15°C/min to 25°C/min, heating is performed to 100°C to 200°C, and temperature is maintained for 6 min to 10 min. To not affect transmission of light and reduce the reflectance of the surface of the first anti-reflection layer 412, the height of the protrusion 4122 formed through etching may range from 50 nm to 200 nm, and the size of the bottom 4123 may range from 150 nm to 450 nm.

Alternatively, in some embodiments, using chemical corrosion as an example, the performing processing on the surface of the to-be-processed plate 4111 to form the optical stack may specifically further include:
performing chemical corrosion on the to-be-processed plate 4111, and forming the second micro-nano structure 4121 on a surface of the to-be-processed plate 4111.

A part of the second micro-nano structure 4121 is the first anti-reflection layer 412, and a part other than the first anti-reflection layer 412 in the optical stack is the substrate 411.

In this way, the second micro-nano structure 4121 can be formed on the surface of the to-be-processed plate 4111 through chemical corrosion, to increase the water drop angle and the oil drop angle of the inner surface of the optical cover plate 4 in the light-transmissive area 414 while reducing the reflectance of the inner surface of the optical cover plate 4 in the light-transmissive area 414. The first anti-reflection layer 412 formed through the chemical etching may alternatively be the light trapping layer.

The performing chemical corrosion on the to-be-processed plate 4111 may specifically include:
after cleaning the surface of the to-be-processed plate 4111, the to-be-processed plate 4111 is first placed in a corrosion tank containing a first corrosion liquid for first preset time and taken out to be cleaned, the to-be-processed plate 4111 is then placed in a corrosion tank containing a second corrosion liquid for second preset time and taken out to be cleaned, and finally, the to-be-processed plate 4111 is dried. After the to-be-processed plate is cooled, an optical stack with a single-side reflectance less than 0.03% is obtained. The optical stack may also be referred to as anti-reflection glass.

A parameter of forming the optical stack with the single-side reflectance less than 0.03% through the chemical etching is not specifically limited in embodiments of this application, and can be selected by a person skilled in the art based on a requirement. To obtain an expected reflectance, the first corrosion liquid may include a mixed solution including HF at a concentration of 0.001% and HCl at a concentration of 1%, and the second corrosion liquid may include a mixed solution including HF at a concentration of 0.001% and Na₂SiO₃ at a concentration of 0.0001%.

It should be noted that in some embodiments, a porous coating layer may be further coated on the to-be-processed plate 4111, to form the optical stack. In this case, the porous coating layer may be understood as the first anti-reflection layer 412 in the optical stack, and the to-be-processed plate 4111 may be understood as the substrate 411 in the optical stack.

FIG. 20 is a flowchart of a preparation method for the hydrophobic film layer 42 in the optical cover plate 4.

Referring to FIG. 20 and in combination with FIG. 18, the forming the hydrophobic film layer 42 on the surface of the optical stack specifically includes:
Step S210: Form the hydrophobic layer with the first micro-nano structure on the surface of the substrate with the second micro-nano structure, where the first micro-nano structure is located on the second micro-nano structure and covers the light-transmissive area on the first anti-reflection layer corresponding to the optical body layer, a surface of the hydrophobic layer facing the optical component is the hydrophobic rough surface, and the hydrophobic film layer includes the hydrophobic layer.

In this way, through arrangement of the hydrophobic layer 421, the hydrophobic rough surface can be formed on the surface of the hydrophobic layer 421 facing the optical component, so that while the reflectance of the substrate 411 on the surface of the first anti-reflection layer 412 is not affected, the optical stack has hydrophobic and oleophobic functions on the hydrophobic rough surface, to be bonded with the first micro-nano structure 4211. Therefore, the water drop angle and the oil drop angle of the inner surface of the optical cover plate 4 in the light-transmissive area 414 are increased, and the roll angle of the inner surface of the optical cover plate 4 in the light-transmissive area 414 is reduced, thereby reducing the proportion of the mist-like dirt 43 formed on the inner surface of the optical cover plate 4. Reference may be made to the foregoing related descriptions for a material, a thickness, and the like of the hydrophobic layer 421, and details are not described herein again.

It should be noted that same as a forming manner of the metal film, in this application, the hydrophobic layer 421 may be formed on the second micro-nano structure 4121 of the substrate 411 through vacuum deposition or liquid coating. The hydrophobic layer 421 may include, but is not limited to, a perfluoropolyethers layer. Using the perfluoropolyethers layer as an example, vacuum evaporation may be used in this application, and a parameter in a vacuum evaporation process is set based on a desired thickness of the perfluoropolyethers layer, so that perfluoropolyethers is heated and vaporized, thereby condensing on the second micro-nano structure 4121 of the substrate 411 to form an anti-pollution hydrophobic layer 421.

The thickness of the perfluoropolyethers layer and the parameter for forming the perfluoropolyethers layer through the vacuum evaporation are not specially limited in embodiments of this application, and may be selected by a person skilled in the art based on a requirement. In some embodiments, to form a perfluoropolyethers layer having a good hydrophobic effect and not affect the morphology of the first micro-nano structure 4211, the thickness of the perfluoropolyethers layer may range from 10 nm to 30 nm.

Referring to FIG. 20 and in combination with FIG. 18, in some embodiments, before the forming the hydrophobic layer 421 with first micro-nano structure 4211 on the surface of the substrate 411 with the second micro-nano structure 4121, the preparation method may further include:
Step S201: Form an underlayer with a third micro-nano structure on the surface of the substrate with the second micro-nano structure, where the third micro-nano structure covers the second micro-nano structure and is adhered between the second micro-nano structure and the first micro-nano structure, and the hydrophobic film layer further includes the underlayer.

It should be noted that through arrangement of the underlayer 422, the underlayer 422 has good bonding strength on the first anti-reflection layer 412, and because the underlayer 422 has high surface activity, the underlayer 422 can adsorb the hydrophobic layer 421 to the first anti-reflection layer 412, increasing adhesion of the hydrophobic layer 421 on the first anti-reflection layer 412, so that the hydrophobic layer 421 is stably adsorbed to the first anti-reflection layer 412, and is not easy to fall off. For a material, a thickness, and the like of the underlayer 422, refer to related descriptions above, and details are not described herein again.

Same as a forming manner of the metal film, in this application, the underlayer 422 may be formed on the first anti-reflection layer 412 through vacuum deposition or liquid coating. Using a silicon dioxide layer as an example, in this application, the underlayer 422 may be formed through sputter plating. A parameter of the sputter plating for forming the underlayer 422 is not specially limited in embodiments of this application, and may be selected by a person skilled in the art based on a requirement. In some embodiments, to ensure that the hydrophobic layer 421 is stably adsorbed to the first anti-reflection layer 412, and the morphology of the first micro-nano structure 4211 is not affected, the thickness of the underlayer 422 may range from 8 nm to 13 nm.

It should be noted that in a process of forming the underlayer 422 and the hydrophobic layer 421, a fully automatic visual special-shaped mounting machine is required for precise positioning, to ensure precision of a non-light-transmissive area 415, and prevent adhesion between the camera module 3 and the optical cover plate 4 from being affected due to the underlayer 422 and the hydrophobic layer 421 being plated to an adhering area 4151 of the optical cover plate 4.

As shown in FIG. 18, after the forming the hydrophobic film layer 42 on the surface of the optical stack, and before the combining the optical cover plate 4 including the optical stack with the optical component, to form the optical assembly, the preparation method further includes:
forming a second anti-reflection layer 413 on a surface of the optical stack facing away from the hydrophobic film layer 42, where the optical body layer 41 further includes the second anti-reflection layer 413.

It should be noted that because the optical cover plate 4 includes the optical body layer 41 and the hydrophobic film layer 42, through arrangement of the second anti-reflection layer 413, a reflectance of the surface (namely, an outer surface of the optical cover plate 4) of the optical body layer 41 facing away from the hydrophobic film layer 42 can be reduced to less than 0.3%, thereby effectively preventing ghosting from being generated during photographing of the electronic device 100 in a general scenario and a strong contrast scenario, and further protecting the outer surface of the optical cover plate 4 from being scratched. For descriptions of the second anti-reflection layer 413, reference may be made to the foregoing related descriptions, and details are not further described herein.

In film design of the second anti-reflection layer 413, film design software such as TFCALC and Macleod may be used to design the film based on optical requirements, and deposition is then performed based on a designed film structure, so that the second anti-reflection layer 413 formed through deposition can satisfy a requirement in which an average single-sided reflectance of visible light in a band ranging from 380 nm to 780 nm is less than 0.3%, ensuring that the visible light in this band has high transmittance.

Because a transmittance requirement for the visible light band is high, a film stack 2H may be used, and a second film layer 4132 is made of a film material with high hardness and a relatively low refractive index. For example, the film material of the second film layer 4132 may be SiO₂. A first film layer 4131 is made of a film material with a refractive index less than a refractive index of the second film layer 4132. For example, the film material of the first film layer 4131 may be Si₃N₄. An initial film system is formed in optical thin film software, so that a film system in which the first film layer 4131 and the second film layer 4132 are alternately stacked is formed. Then, a band optimization condition is input to continuous targets, to ensure that the transmittance and the reflectance satisfy requirements. Finally, a Lab value requirement is input to a color target, to ensure that a color of transmitted light is colorless, and the second anti-reflection layer 413 satisfying the foregoing requirement is obtained after a series of optimization designs.

In an embodiment, a vacuum sputter plating machine may be used to plate the optical stack on which the hydrophobic film layer 42 is formed, to form the optical cover plate 4 having the second anti-reflection layer 413. Plating parameters may be selected based on a material of each layer of the film system structure. This is not specially limited in this application. For example, plating parameters of the first film layer 4131 may be: sputter power of a silicon target: 7000 W to 8000 W, a flow rate of Ar: 100 sccm to 150 sccm, a flow rate of N₂: 50 sccm to 100 sccm, and power of a Radical Source (radical ion source): 4000 W to 5000 W. Plating parameters of the second film layer 4132 may be: sputter power of a silicon target: 7500 W to 8500 W, a flow rate of Ar: 200 sccm to 300 sccm, a flow rate of O₂: 100 sccm to 150 sccm; and power of a Radical Source: 4000 W to 5000 W.

It should be noted that in some embodiments, during preparation of the optical cover plate 4, after the optical stack is formed, the second anti-reflection layer 413 may be first formed on the surface of the optical stack facing away from the first anti-reflection layer 412, and the hydrophobic film layer 42 is finally formed on the first anti-reflection layer 412 of the optical stack.

Alternatively, in some embodiments, during preparation of the optical cover plate 4, the second anti-reflection layer 413 may be first formed on a surface of a to-be-processed plate 4111, and the first anti-reflection layer 412 and the hydrophobic film layer 42 are sequentially formed on the other surface of the to-be-processed plate 4111. In this application, a preparing sequence of the second anti-reflection layer 413 is not further limited.

The following further describes a preparation method for the optical cover plate 4 of this application with reference to specific embodiments.

### Embodiment 1

### 1. Preparation of the optical stack

Step 1: Vacuum sputter of a molybdenum film on the to-be-processed plate

A film thickness of the molybdenum film was set to 5 nm, and was input to a plating machine. Then, process parameters were set as follows: background vacancy was 5.0×10⁻⁴ Pa, and temperature was set to 80°C; and
to strengthen adhesion between the film layer and the to-be-processed plate 4111, pre-processing was performed by using radio frequency (RF) magnetron sputter before plating, and specific parameters were as follows: power of a Radical Source was 4500 W, a flow rate of Ar was 0 sccm, a flow rate of O₂ was 120 sccm, a flow rate of N₂ was 0 sccm, and time was 240s.

To obtain the foregoing molybdenum film with the film thickness of 5 nm, plating parameters were set as follows: molybdenum target sputter power was 3000 W, and the flow rate of Ar was 120 sccm.

The to-be-processed plate 4111 to be plated was loaded onto a substrate rack, and was placed in the foregoing plating machine; a door was closed to evacuate, a plating program was input, and film formation (plating metal molybdenum) was started by clicking, to complete plating.

### Step 2: Performing heat treatment on the molybdenum film

(1) After the plating was completed, the molybdenum target and gas were turned off, and after evacuation to a vacuum level of 5.0×10⁻³ Pa, the molybdenum film was heated at a heating rate of 20°C/min and heated to 120°C, and temperature was maintained for 7 min, to obtain a uniformly distributed nano particle template, where a diameter of a particle 4125 on the nano particle template ranged from 50 nm to 70 nm.
(2) Air was introduced, cooling time was 5 min, and air inlet time was 3 min.
(3) A sheet was taken out, and transferred into a plasma etching device, and waited to be etched.

### Step 3: Plasma etching

(1) Parameters of the plasma etching: Reactive ion etching power was 500 W, chamber pressure in the plasma etching device was 10 Pa, background vacuum was 5.0×10⁻³ Pa, the reactive ion etching power was 500 W, the flow rate of argon was 40 sccm, a flow rate of trifluoromethane was 5 sccm, and etching time was 10 min. After the etching was completed, a plurality of connected protrusions 4122 were constructed on the surface of the optical stack, and the protrusion 4122 was a nano-sized protrusion. The plurality of nano-sized protrusions can form the second micro-nano structure 4121. The height of the protrusion 4122 was 120 nm, and the size of the bottom 4123 was 200 nm.
(2) Air was introduced, cooling time was 5 min, and air inlet time was 3 min.
(3) A sheet was taken out.

### Step 4: Cleaning and removing a residual molybdenum film

Cleaning processing was performed on the residual molybdenum film layer by using a deplating solution at a room temperature, and then the surface of the to-be-processed plate 4111 was cleaned by using pure water, to obtain an optical stack with a low single-side reflectance and a high transmittance.

It is tested that the transmittance of visible light on the formed optical stack is 90%, and the reflectance of the surface of the optical stack with the second micro-nano structure 4121 decreases to less than 0.03%.

### 2. Preparation of the hydrophobic film layer

### Step 1: Plasma surface treatment

(1) A parameter of the plasma surface treatment was: background vacancy was 5.0×10⁻³ Pa.
(2) To strengthen the adhesion between the film layer and the substrate 411, anodic plasma treatment was performed on the optical stack, and specific parameters were as follows: power ranged from 1 kW to 5 kW, a flow rate of Ar was 200 sccm, a flow rate of O₂ was 80 sccm, and time was 240s.

### Step 2: Plating the underlayer

Using a silicon dioxide layer as an example, to obtain the underlayer 422, background vacuum was 5.0×10⁻³ Pa, and parameters of magnetron sputter plating were set as follows: sputter power of a silicon target was 8 kW, the flow rate of Ar was 250 sccm, the flow rate of Ar was 250 sccm, the flow rate of O₂ was 120 sccm, and plating time was 2 min. According to the foregoing plating process of vacuum sputter of the molybdenum film on the to-be-processed plate 4111, the underlayer 422 with a thickness ranging from 8 nm to 13 nm was obtained.

### Step 3: Plating the hydrophobic layer

Using the perfluoropolyethers layer as an example, to obtain the anti-pollution hydrophobic layer 421, parameters of the vacuum evaporation were set as follows: a plating current was 260 A, the flow rate of Ar was 220 sccm, the flow rate of O₂ was 220 sccm, and the plating time was 3 min. By using the foregoing vacuum evaporation parameters, perfluoropolyethers can be evaporated on the underlayer 422 to form a hydrophobic layer 421 with a thickness ranging from 10 nm to 30 nm.

### 3. Preparation of the second anti-reflection layer

### Step 1: Designing a film system structure

Film system design of the second anti-reflection layer 413 is based on TFCALC. An average single-side reflectance of 380 nm to 780 nm is required to be less than 0.3%. Due to a high transmittance requirement for the visible light band, the film stack 2H is used in the film system. The film material of the first film layer 4131 (L) is made of SiO₂ with high hardness and a relatively low refractive index, and the film material of the second film layer 4132 (H) is made of Si₃N₄. An initial film system LH is formed in the optical thin film software. In this way, a film system in which the first film layer 4131 and the second film layer 4132 are alternately stacked is formed. The film system structure of the second anti-reflection layer 413 obtained after a series of optimization designs is shown in Table 1.

**Table 1 shows a film system structure of an optical cover plate including a second anti-reflection layer of a first film system**

| Structure | Stack | Material | 550 nm refractive index | Physical thickness (nm) |
|---|---|---|---|---|
| Outer surface | Environment | Air | 1.0003 | / |
| | Second anti-reflection layer | SiO₂ | 1.4541 | 97.35 |
| | | Si₃N₄ | 1.9562 | 144.56 |
| | | SiO₂ | 1.4541 | 199.72 |
| | | Si₃N₄ | 1.9562 | 33.4 |
| | | SiO₂ | 1.4541 | 17.75 |
| | | Si₃N₄ | 1.9562 | 2158.76 |
| | | SiO₂ | 1.4541 | 13.36 |
| | | Si₃N₄ | 1.9562 | 42.44 |
| | | SiO₂ | 1.4541 | 39.71 |
| | | Si₃N₄ | 1.9562 | 16.57 |
| | | SiO₂ | 1.4541 | 30 |
| Base material | | Glass | 1.5163 | / |
| First anti-reflection layer | | Glass | Continuously changing refractive index | 100 nm |
| Inner surface | Hydrophobic layer | Perfluoropolyethers | 1.3 | 10 nm |

Step 2: A second anti-reflection layer 413 was formed on the substrate 411, a film thickness of each layer in the second anti-reflection layer 413 designed in Table 1 was input to the plating machine, and process parameters were set as follows: background vacancy was 5.0×10⁻⁴, and temperature was set to 80 centigrade.

To strengthen the adhesion between the film layer and the substrate 411, pre-processing was performed by using RF before the plating, and specific parameters were as follows: the power of the Radical Source was 4500 W, the flow rate of Ar was 0 sccm, the flow rate of O₂ was 120 sccm, the flow rate of N₂ was 0 sccm, and time was 240s.

To obtain the physical thickness of Si₃N₄ in the foregoing design, the parameters of plating were set as follows: sputter power of an Aluminum target was 7500 W, the flow rate of Ar was 120 sccm, and the flow rate of N₂ was 80 sccm, and the power of the Radical Source was 4500 W.

To obtain the physical thickness of SiO₂ in the foregoing design, the parameters of plating were set as follows: sputter power of a silicon target was 8000 W, the flow rate of Ar was 250 sccm, the power of the Radical Source was 4500 W, the flow rate of Ar was 250 sccm, and the flow rate of O₂ was 120 sccm.

After the plating was completed, a high-performance optical cover plate 4 with transmittance of 98.45%, a reflectance of an outer surface less than 0.3%, a water drop angle in the light-transmissive area of the inner surface greater than 150°, a reflectance of the inner surface less than 0.03%, Vickers hardness of the outer surface of 1580 HV, hardness of 1300 gram-force, and Mohs hardness of 7 was obtained.

### Embodiment 2

### 1. Preparation of the optical stack

### Step 1: Vacuum sputter of a molybdenum film on the to-be-processed plate

A film thickness of the molybdenum film was set to 5 nm, and was input to a plating machine. Then, process parameters were set as follows: background vacancy was 5.0×10⁻⁴ Pa, and temperature was set to 80°C.
to strengthen adhesion between the film layer and the to-be-processed plate 4111, pre-processing was performed by using radio frequency (RF) magnetron sputter before plating, and specific parameters were as follows: power of a Radical Source was 4500 W, a flow rate of Ar was 0 sccm, a flow rate of O₂ was 120 sccm, a flow rate of N₂ was 0 sccm, and time was 240s.

To obtain the foregoing molybdenum film with a film thickness of 5 mm, the plating parameters were set as follows: sputter power of a molybdenum target was 3000 W, and a flow rate of Ar was 120 sccm.

The to-be-processed plate 4111 to be plated was loaded onto a substrate rack, and was placed in the foregoing plating machine; a door was closed to evacuate, a plating program was input, and film formation (plating metal molybdenum) was started by clicking, to complete plating.

### Step 2: Performing heat treatment on the molybdenum film

(1) After the plating was completed, the molybdenum target and gas were turned off, and after evacuation to a vacuum level of 5.0×10⁻³ Pa, the molybdenum film was heated at a heating rate of 25°C/min and heated to 150°C, and temperature was maintained for 6 min to 10 min, to obtain a uniformly distributed nano particle template, where a diameter of a nano particle on the nano particle template ranged from 60 nm to 80 nm.
(2) Air was introduced, cooling time was 5 min, and air inlet time was 3 min.
(3) A sheet was taken out, and transferred into a plasma etching device, and waited to be etched.

### Step 3: Plasma etching

(1) Parameters of the plasma etching: Reactive ion etching power was 500 W, chamber pressure in the plasma etching device was 10 Pa, background vacuum was 5.0×10⁻³ Pa, the reactive ion etching power was 500 W, the flow rate of argon was 40 sccm, a flow rate of trifluoromethane was 5 sccm, and etching time was 10 min. After the etching was completed, a plurality of connected protrusions 4122 were constructed on the surface of the optical stack, and the protrusion 4122 was a nano-sized protrusion. A plurality of nano-sized protrusions formed the second micro-nano structure 4121. The height of the protrusion 4122 ranged from 50 nm to 120 nm, and the size of the bottom 4123 ranged from 170 nm to 500 nm.
(2) Air was introduced, cooling time was 5 min, and air inlet time was 3 min.
(3) A sheet was taken out.

### Step 4: Cleaning and removing a residual molybdenum film

Cleaning processing was performed on the residual molybdenum film layer by using a deplating solution at a room temperature, and then the surface of the to-be-processed plate 4111 was cleaned by using pure water, to obtain an optical stack with a low single-side reflectance and a high transmittance.

It is tested that the transmittance of visible light on the formed optical stack is 98.45%, and the reflectance of the surface of the optical stack with the second micro-nano structure 4121 decreases to less than 0.03%.

### 2. Preparation of the hydrophobic film layer

### Step 1: Plasma surface treatment

(1) A parameter of the plasma surface treatment was: background vacancy was 5.0×10⁻³ Pa.
(2) To strengthen the adhesion between the film layer and the substrate 411, anodic plasma treatment was performed on the optical stack, and specific parameters were as follows: power ranged from 1 kW to 5 kW, a flow rate of Ar was 200 sccm, a flow rate of O₂ was 80 sccm, and time was 240s.

### Step 2: Plating the underlayer

Using a silicon dioxide layer as an example, to obtain the underlayer 422, background vacuum was 5.0×10⁻³ Pa, and parameters of magnetron sputter plating were set as follows: sputter power of a silicon target was 8 kW, the flow rate of Ar was 250 sccm, the flow rate of Ar was 250 sccm, the flow rate of O₂ was 120 sccm, and plating time was 2 min. According to the foregoing plating process of vacuum sputter of the molybdenum film on the to-be-processed plate 4111, the underlayer 422 with a thickness ranging from 3 nm to 13 nm was obtained.

### Step 3: Plating the hydrophobic layer

Using the perfluoropolyethers layer as an example, to obtain the anti-pollution hydrophobic layer 421, parameters of the vacuum evaporation were set as follows: a plating current was 260 A, the flow rate of Ar was 220 sccm, the flow rate of O₂ was 220 sccm, and the plating time was 3 min. By using the foregoing vacuum evaporation parameters, perfluoropolyethers can be evaporated on the underlayer 422 to form a hydrophobic layer 421 with a thickness ranging from 5 nm to 30 nm.

### 3. Preparation of the second anti-reflection layer

### Step 1: Designing a film system structure

Film system design of the second anti-reflection layer 413 is based on TFCALC. An average single-side reflectance of 380 nm to 780 nm is required to be less than 0.3%. Due to a high transmittance requirement for the visible light band, the film stack 2H is used in the film system. The film material of the first film layer 4131 (L) is made of SiO₂ with high hardness and a relatively low refractive index, and the film material of the second film layer 4132 (H) is made of Si₃N₄. An initial film system LH is formed in the optical thin film software. In this way, a film system in which the first film layer 4131 and the second film layer 4132 are alternately stacked is formed. The film system structure of the second anti-reflection layer 413 obtained after a series of optimization designs is shown in Table 2.

**Table 2 shows a film system structure of an optical cover plate including a second anti-reflection layer of a second film system**

| Structure | Stack | Material | 550 nm refractive index | Physical thickness (nm) |
|---|---|---|---|---|
| Outer surface | Environment | Air | 1.0003 | / |
| | Second anti-reflection layer | SiO₂ | 1.4541 | 84.88 |
| | | Si₃N₄ | 1.9562 | 136.14 |
| | | SiO₂ | 1.4541 | 31.86 |
| | | Si₃N₄ | 1.9562 | 15.66 |
| | | SiO₂ | 1.4541 | 10 |
| Base material | | Glass | 1.5163 | / |
| First anti-reflection layer | | Glass | Continuously changing refractive index | 100 nm |
| Inner surface | Hydrophobic layer | Perfluoropolyethers | 1.3 | 10 nm |

Step 2: A second anti-reflection layer 413 was formed on the substrate 411, a film thickness of each layer in the second anti-reflection layer 413 designed in Table 2 was input to the plating machine, and process parameters were set as follows: background vacancy was 5.0×10⁻⁴, and temperature was set to 80 centigrade.

To strengthen the adhesion between the film layer and the substrate 411, pre-processing was performed by using RF before the plating, and specific parameters were as follows: the power of the Radical Source was 4500 W, the flow rate of Ar was 0 sccm, the flow rate of O₂ was 120 sccm, the flow rate of N₂ was 0 sccm, and time was 240s.

To obtain the physical thickness of Si₃N₄ in the foregoing design, the parameters of plating were set as follows: sputter power of an Aluminum target was 7500 W, the flow rate of Ar was 120 sccm, and the flow rate of N₂ was 80 sccm, and the power of the Radical Source was 4500 W.

To obtain the physical thickness of SiO₂ in the foregoing design, the parameters of plating were set as follows: sputter power of a silicon target was 8000 W, the flow rate of Ar was 250 sccm, the power of the Radical Source was 4500 W, the flow rate of Ar was 250 sccm, and the flow rate of O₂ was 120 sccm.

After the plating was completed, an optical cover plate 4 with transmittance 98.45%, a reflectance of an outer surface less than 0.3%, a water drop angle in the transmitting area of the inner surface greater than 150°, and a reflectance of the inner surface less than 0.03% was obtained.

### Embodiment 3

### 1. Preparation of the optical stack

### Step 1:

The surface of the to-be-processed plate 4111 was cleaned by using a cleaning agent, and then cleaned by using deionized water. The to-be-processed plate 4111 after being cleaned was placed in a corrosion tank containing a first corrosion liquid for 3 h, and was taken out to be cleaned by using the deionized water, for example, the first corrosion liquid was a mixed solution including HF at a concentration of 0.001% and HCl at a concentration of 1%.

### Step 2:

The to-be-processed plate 4111 after being cleaned again was placed in a corrosion tank containing a second corrosion liquid for 20 h, and was taken out to be cleaned by using the deionized water, for example, the second corrosion liquid was a mixed solution including HF at a concentration of 0.001% and Na₂SiO₃ at a concentration of 0.0001%.

### Step 3:

The to-be-processed plate 4111 after being cleaned again was placed in a drying oven at 300°C, and was dried for 60 min, a heat switch of the oven was turned off. When the temperature is reduced to 50°C, the to-be-processed plate 4111 was taken out of the oven, to obtain an optical stack with a single-side reflectance less than 0.03%. The optical stack was single-side anti reflection glass. A surface of the prepared optical stack had a plurality of depressions. The depressions were micro-sized and/or nano-sized depressions, and the plurality of depressions formed the second micro-nano structure 4121. A layer on which the second micro-nano structure 4121 was located was the first anti-reflection layer 412.

### 2. Preparation of the hydrophobic film layer

### Step 1: Plasma surface treatment

(1) A parameter of the plasma surface treatment was: background vacancy was 5.0×10⁻³ Pa.
(2) To strengthen the adhesion between the film layer and the substrate 411, anodic plasma treatment was performed on the optical stack, and specific parameters were as follows: power ranged from 1 kW to 5 kW, a flow rate of Ar was 200 sccm, a flow rate of O₂ was 80 sccm, and time was 240s.

### Step 2: Plating the underlayer

Using a silicon dioxide layer as an example, to obtain the underlayer 422, background vacuum was 5.0×10⁻³ Pa, and parameters of magnetron sputter plating were set as follows: sputter power of a silicon target was 8 kW, the flow rate of Ar was 250 sccm, the flow rate of Ar was 250 sccm, the flow rate of O₂ was 120 sccm, and plating time was 2 min. According to the foregoing plating process of vacuum sputter of the molybdenum film on the to-be-processed plate 4111, the underlayer 422 with a thickness ranging from 8 nm to 13 nm was obtained.

### Step 3: Plating the hydrophobic layer

Using the perfluoropolyethers layer as an example, to obtain the anti-pollution hydrophobic layer 421, parameters of the vacuum evaporation were set as follows: a plating current was 260 A, the flow rate of Ar was 220 sccm, the flow rate of O₂ was 220 sccm, and the plating time was 3 min. By using the foregoing vacuum evaporation parameters, perfluoropolyethers can be evaporated on the underlayer 422 to form a hydrophobic layer 421 with a thickness ranging from 10 nm to 30 nm.

### 3. Preparation of the second anti-reflection layer

### Step 1: Designing a film system structure

Film system design of the second anti-reflection layer 413 is based on TFCALC. An average single-side reflectance of 380 nm to 780 nm is required to be less than 0.3%. Due to a high transmittance requirement for the visible light band, the film stack 2H is used in the film system. The film material of the first film layer 4131 (L) is made of SiO₂ with high hardness and a relatively low refractive index, and the film material of the second film layer 4132 (H) is made of Si₃N₄. An initial film system LH is formed in the optical thin film software. In this way, a film system in which the first film layer 4131 and the second film layer 4132 are alternately stacked is formed. The film system structure of the second anti-reflection layer 413 obtained after a series of optimization designs is shown in Table 1.

**Table 3 shows a film system structure of an optical cover plate including a second anti-reflection layer of a third film system**

| Structure | Stack | Material | 550 nm refractive index | Physical thickness (nm) |
|---|---|---|---|---|
| Outer surface | Environment | Air | 1.0003 | / |
| | Second anti-reflection layer | SiO₂ | 1.4541 | 84.88 |
| | | Si₃N₄ | 1.9562 | 136.14 |
| | | SiO₂ | 1.4541 | 31.86 |
| | | Si₃N₄ | 1.9562 | 15.66 |
| | | SiO₂ | 1.4541 | 10 |
| Base material | | Glass | 1.5163 | / |
| First anti-reflection layer | | Glass | Continuously changing refractive index | 100 nm |
| Inner surface | Anti-fouling layer | Perfluoropolyethers | 1.3 | 10 nm |

Step 2: A second anti-reflection layer 413 was formed on the substrate 411, a film thickness of each layer in the second anti-reflection layer 413 designed in Table 3 is input to the plating machine, and process parameters were set as follows: background vacancy was 5.0×10⁻⁴, and temperature was set to 80 centigrade.

To strengthen the adhesion between the film layer and the substrate 411, pre-processing was performed by using RF before the plating, and specific parameters were as follows: the power of the Radical Source was 4500 W, the flow rate of Ar was 0 sccm, the flow rate of O₂ was 120 sccm, the flow rate of N₂ was 0 sccm, and time was 240s.

To obtain the physical thickness of Si₃N₄ in the foregoing design, the parameters of plating were set as follows: sputter power of an Aluminum target was 7500 W, the flow rate of Ar was 120 sccm, and the flow rate of N₂ was 80 sccm, and the power of the Radical Source was 4500 W.

To obtain the physical thickness of SiO₂ in the foregoing design, the parameters of plating were set as follows: sputter power of a silicon target was 8000 W, the flow rate of Ar was 250 sccm, the power of the Radical Source was 4500 W, the flow rate of Ar was 250 sccm, and the flow rate of O₂ was 120 sccm.

After the plating was completed, a high-performance optical cover plate 4 with transmittance of 98.45%, a reflectance of an outer surface less than 0.3%, a water drop angle in the transmitting area of the inner surface greater than 150°, a reflectance of the inner surface less than 0.03%, Vickers hardness of the outer surface of 1580 HV, hardness of 1300 gram-force, and Mohs hardness of 7 was obtained.

Based on the foregoing descriptions, in the electronic device 100 provided in embodiments of this application, a housing and the optical assembly according to any one of the foregoing aspects can be used. An optical component in the optical assembly is located in an accommodating space of the housing 2. An optical cover plate 4 is located on the housing 2 to replace an original optical cover plate 4a, and covers a light-incident surface 321 of the optical component. While the optical component (for example, the camera module 3) is protected, to effectively reduce ghosting intensity during photographing by the camera module 3 in a strong contrast environment, it can further be ensured that a water drop angle of an inner surface of the optical cover plate 4 in a light-transmissive area 414 is greater than 150°, effectively reducing a proportion of mist-like dirt 43 formed on the inner surface of the optical cover plate 4.

It should be noted that using the camera module 3 as an example, for a structure of the housing 2, formation of the accommodating space, and arrangement of the optical component in the accommodating space, refer to the foregoing related descriptions of the electronic device 100, and details are not described herein again.

In the descriptions of embodiments of this application, it should be noted that unless specified or limited otherwise, the terms "mounting", "connected", and "connecting" should be understood broadly, for example, which may be a fixed connection, an indirect connection through an intermediary, or internal communication inside two components or an interaction relationship between two components. A person of ordinary skill in the art can understand specific meanings of the foregoing terms in embodiments of this application according to a specific situation.

The terms such as "first", "second", "third", and "fourth" (if any) in the specification of embodiments of this application and claims and in the accompanying drawings are used for distinguishing between similar objects and not necessarily used for describing any particular order or sequence.

## Claims

1. An optical assembly, comprising:
an optical component; and
an optical cover plate, wherein the optical cover plate comprises an optical body layer, the optical body layer blocks a light-incident surface of the optical component and has a light-transmissive area arranged opposite to the optical component; and
the optical cover plate further comprises a hydrophobic film layer, the hydrophobic film layer is light-transmissive, is located on a side of the optical body layer facing the optical component, and covers the light-transmissive area, wherein a surface of the hydrophobic film layer facing the optical component is a hydrophobic rough surface with a first micro-nano structure.

2. The optical assembly according to claim 1, wherein the optical component is a camera module, and the camera module comprises a lens, wherein
the optical body layer blocks a light-incident surface of the lens; and
a position of the light-transmissive area in the optical body layer is opposite to a position of the lens.

3. The optical assembly according to claim 2, wherein the camera module further comprises a module body, the lens is located on a side of the module body facing the optical cover plate, wherein the non-light-transmissive area in the optical body layer surrounds a peripheral edge of the light-transmissive area, and the non-light-transmissive area blocks the module body.

4. The optical assembly according to any one of claims 1 to 3, wherein the hydrophobic film layer of the optical cover plate comprises a hydrophobic layer, the hydrophobic layer is located on a side of the optical body layer facing the optical component and covers the light-transmissive area, and a surface of the hydrophobic layer facing the optical component is a hydrophobic rough surface.

5. The optical assembly according to any one of claims 1 to 4, wherein the optical body layer of the optical cover plate comprises a substrate and a first anti-reflection layer, the first anti-reflection layer covers a side of the substrate facing the hydrophobic film layer, and a side of the first anti-reflection layer facing the hydrophobic film layer is a rough surface with a second micro-nano structure, wherein the first micro-nano structure is adhered to and covers the second micro-nano structure.

6. The optical assembly according to claim 5, wherein a shape of the first micro-nano structure matches a shape of the second micro-nano structure.

7. The optical assembly according to claim 5, wherein a refractive index of the first anti-reflection layer is configured to: gradually change from a refractive index corresponding to the first anti-reflection layer to a refractive index corresponding to air in a direction from the substrate to the hydrophobic film layer.

8. The optical assembly according to any one of claims 5 to 7, wherein the second micro-nano structure comprises a plurality of protrusions, wherein
a bottom of the protrusion is connected to the substrate, a top of the protrusion is arranged facing the hydrophobic film layer, and the protrusion gradually tapers from the bottom to the top.

9. The optical assembly according to claim 8, wherein bottoms of the plurality of protrusions are connected.

10. The optical assembly according to claim 8 or 9, wherein the protrusion is a micro-sized and/or nano-sized protrusion, wherein a height of the protrusion is greater than or 50 nm and less than or equal to 200 nm, and a size of the bottom of the protrusion is greater than or 150 nm and less than or equal to 500 nm.

11. The optical assembly according to claim 4, wherein a thickness of the hydrophobic layer is greater than or equal to 5 nm and less than or equal to 30 nm.

12. The optical assembly according to any one of claims 8 to 10, wherein the plurality of protrusions are arranged in an array.

13. The optical assembly according to any one of claims 5 to 7, wherein the second micro-nano structure comprises a plurality of depressions, wherein the depressions are micro-sized and/or nano-sized depressions, and the plurality of depressions are uniformly arranged on the optical body layer.

14. The optical assembly according to claim 5, wherein the first anti-reflection layer is a light trapping layer or a porous coating layer.

15. The optical assembly according to any one of claims 5 to 14, wherein the hydrophobic film layer further comprises an underlayer, the underlayer is attached to a light-transmissive area on the side of the optical body layer facing the optical component, and the hydrophobic layer of the hydrophobic film layer covers the underlayer.

16. The optical assembly according to claim 15, wherein a surface of the underlayer facing the hydrophobic layer of the hydrophobic film layer has a third micro-nano structure, wherein
the third micro-nano structure covers the second micro-nano structure in the optical body layer and is adhered between the second micro-nano structure and the first micro-nano structure; and
a shape of the third micro-nano structure matches the shape of the second micro-nano structure.

17. The optical assembly according to claim 15, wherein a thickness of the underlayer is less than the thickness of the hydrophobic layer in the hydrophobic film layer.

18. The optical assembly according to claim 15, wherein the underlayer is an active underlayer the same as a base material of the first anti-reflection layer in the optical body layer.

19. The optical assembly according to claim 18, wherein the base material of the first anti-reflection layer is silicon dioxide, and the active underlayer is a silicon dioxide layer.

20. The optical assembly according to any one of claims 5 to 14, wherein the hydrophobic layer of the hydrophobic film layer is a perfluoropolyethers plating layer.

21. The optical assembly according to any one of claims 1 to 14, wherein a water drop angle of the optical cover plate on the hydrophobic film layer is greater than 150°, and/or a roll angle of the optical cover plate on the hydrophobic film layer is less than 40°.

22. The optical assembly according to any one of claims 1 to 14, wherein the optical body layer further comprises a second anti-reflection layer, wherein the second anti-reflection layer is light-transmissive and is located on a surface of the substrate of the optical body layer facing away from the hydrophobic film layer.

23. An optical assembly preparation method, wherein the preparation method is used for preparing the optical assembly according to any one of claims 1 to 22, and the preparation method comprises:
preparing an optical stack, wherein an optical cover plate comprises an optical body layer and a hydrophobic film layer, and the optical body layer comprises the optical stack;
forming a hydrophobic film layer on a surface of the optical stack, wherein the hydrophobic film layer covers a light-transmissive area on the optical stack corresponding to the optical body layer, and a surface of the hydrophobic film layer facing away from the optical stack is a hydrophobic rough surface with a first micro-nano structure; and
combining the optical cover plate comprising the optical stack with an optical component, to form the optical assembly, wherein the hydrophobic rough surface is arranged facing the optical component.

24. The preparation method according to claim 23, wherein the preparing an optical stack specifically comprises:
processing a surface of a to-be-processed plate to form the optical stack, wherein the to-be-processed plate is an unprocessed glass plate, wherein
the optical stack comprises a substrate and a first anti-reflection layer, the first anti-reflection layer covers a side of the substrate facing the hydrophobic film layer, a side of the first anti-reflection layer facing the hydrophobic film layer is a rough surface with a second micro-nano structure, and the hydrophobic film layer is located on the first anti-reflection layer and covers a light-transmissive area on the first anti-reflection layer corresponding to the optical body layer.

25. The preparation method according to claim 24, wherein the forming a hydrophobic film layer on a surface of the optical stack specifically comprises:
forming a hydrophobic layer with the first micro-nano structure on a surface of the substrate with the second micro-nano structure, wherein
the first micro-nano structure is located on the second micro-nano structure and covers the light-transmissive area on the first anti-reflection layer corresponding to the optical body layer, a surface of the hydrophobic layer facing the optical component is the hydrophobic rough surface, and the hydrophobic film layer comprises the hydrophobic layer.

26. The preparation method according to claim 25, wherein before the forming a hydrophobic layer with the first micro-nano structure on a surface of the substrate with the second micro-nano structure, the preparation method further comprises:
forming an underlayer with a third micro-nano structure on the surface of the substrate with the second micro-nano structure, wherein
the third micro-nano structure covers the second micro-nano structure and is adhered between the second micro-nano structure and the first micro-nano structure, and the hydrophobic film layer further comprises the underlayer.

27. The preparation method according to any one of claims 24 to 26, wherein the processing a surface of a to-be-processed plate to form the optical stack specifically comprises:
forming a metal film on the to-be-processed plate under a vacuum condition, and performing heat treatment on the metal film, to contract the metal film, and obtain a particle template having a plurality of particles;
performing plasma etching on the particle template, to form the second micro-nano structure on a particle surface of the particle template; and
performing cleaning processing on the particle template to obtain the optical stack, wherein a part of the second micro-nano structure is the first anti-reflection layer, and a part other than the first anti-reflection layer in the optical stack is the substrate.

28. The preparation method according to any one of claims 24 to 26, wherein the processing a surface of a to-be-processed plate to form the optical stack specifically comprises:
performing chemical corrosion on the to-be-processed plate, and forming the second micro-nano structure on the surface of the to-be-processed plate to obtain the optical stack, wherein
a part of the second micro-nano structure is the first anti-reflection layer, and a part other than the first anti-reflection layer in the optical stack is the substrate.

29. The preparation method according to any one of claims 24 to 26, wherein after the forming a hydrophobic film layer on a surface of the optical stack, and before the combining the optical cover plate comprising the optical stack with an optical component, to form the optical assembly, the preparation method further comprises:
forming a second anti-reflection layer on a surface of the optical stack facing away from the hydrophobic film layer, wherein the optical body layer further comprises the second anti-reflection layer.

30. An electronic device, comprising a housing and the optical assembly according to any one of claims 1 to 22, wherein an optical component in the optical assembly is located in an accommodating space of the housing, and the optical cover plate is located on the housing and covers a light-incident surface of the optical component.
